# EUROPEAN PATENT SPECIFICATION

(11) **EP 4 455 874 B1**
(45) Date of publication and mention of the grant of the patent: **10.06.2026**
(21) Application number: 23759128.4
(22) Date of filing: 20.02.2023
(51) Int. Cl.: G06F 9/50, G06F 9/48, G06F 9/445, G06F 13/24, G06F 30/30, G06F 115/08, G06F 9/52, G06F 9/4401

(54) **SOFTWARE AND HARDWARE INTERACTION METHOD AND APPARATUS FOR ACCESSING LOGIC IP**
SOFTWARE- UND HARDWAREINTERAKTIONSVERFAHREN UND VORRICHTUNG FÜR DEN ZUGRIFF AUF EIN LOGISCHES IP
PROCÉDÉ ET APPAREIL D'INTERACTION LOGICIELLE ET MATÉRIELLE POUR ACCÉDER À UN IP LOGIQUE

(30) Priority: 28.02.2022 CN 202210193059
(43) Date of publication of application: 30.10.2024
(73) Proprietor: Huawei Technologies Co., Ltd., Shenzhen, Guangdong 518129 (CN)
(72) Inventor: LI, Junchan, Shenzhen, Guangdong 518129 (CN); LI, Dayu, Shenzhen, Guangdong 518129 (CN)
(74) Representative: Körber, Martin Hans
(86) International application number: PCT/CN2023/077252
(87) International publication number: WO 2023/160503

(56) References cited:
- CN-A- 112 906 326
- US-A1- 2008 229 058
- US-A1- 2009 070 728
- US-B2- 11 151 442
- US-B2- 8 046 727
- SHENG LINYANG, ZHOU GUOHUI, CUI YUANQUAN, ZHAO WEI, ZHAO GUOSHENG: "Research on Star Acquirement and Star Identification for IP Core Based on Single Chip FPGA", NATURAL SCIENCE JOURNAL OF HARBIN NORMAL UNIVERSITY, vol. 27, no. 1, 28 February 2011 (2011-02-28), pages 37 - 40, XP009548525, ISSN: 1000-5617
- WEIN-TSUNG SHEN ; CHIH-HAO CHAO ; YU-KUANG LIEN ; AN-YEU (ANDY) WU: "A New Binomial Mapping and Optimization Algorithm for Reduced-Complexity Mesh-Based On-Chip Network", NETWORKS-ON-CHIP, 2007. NOCS 2007. FIRST INTERNATIONAL SYMPOSIUM ON, IEEE, PI, 1 May 2007 (2007-05-01), Pi , pages 317 - 322, XP031090776, ISBN: 978-0-7695-2773-4

## Description

### TECHNICAL FIELD

Embodiments of this application relate to the field of chip technologies, and in particular, to a software and hardware interaction method and an apparatus for accessing a logical IP.

### BACKGROUND

With the development of chip technologies, chips oriented to the same market are classified into high-end, medium-end, and low-end chips based on performance and function diversity of the chips. The low-end chips pursue low costs. More logical intellectual properties (intellectual properties, IPs) indicate higher chip costs. Therefore, in the low-end chips, logical IPs are usually combined. Functions of a plurality of logical IPs whose calculation may be partially reused are combined into one logical IP, and the logical IP obtained through combination includes all functions of the plurality of IPs before the combination. The high-end chips pursue high performance. More logical IPs indicate higher operating efficiency of the chips. Therefore, in the high-end chips, a plurality of logical IPs are usually independent of each other. In the medium-level chips, some logical IPs are properly combined according to an actual requirement.

Currently, one logical IP corresponds to one software driver. During logical IP splitting or combination (splitting or combination for short), software driver splitting or combination also needs to be performed for reconfiguration. As a result, a plurality of sets of software drivers of different architectures need to be developed and maintained, and costs are high. In addition, an architecture change of the software driver may cause an application programming interface (application programming interface, API) to change, and a user usage manner also changes. This deteriorates user experience.

The publication of US8046727B2 (Solomon Neal, 2011-10-25) discloses an approach related to consolidating logical IP, however it remains silent on how the pre-consolidation architectural artefacts and driver management should be handled in the consolidated core.

### SUMMARY

Embodiments of this application provide a software and hardware interaction method and an apparatus for accessing a logical IP, so that software drivers can be reused during logical IP splitting or combination, thereby reducing costs and improving user experience.

To achieve the foregoing objectives, the following technical solutions are used in embodiments of this application.

According to a first aspect, an embodiment of this application provides a software and hardware interaction method for accessing a logical intellectual property IP. A first software driver is configured to invoke a function of a first logical IP. A second software driver is configured to invoke a function of a second logical IP. A third logical IP is obtained by combining the first logical IP and the second logical IP. The third logical IP includes two interrupt numbers and two groups of task registers. The two groups of task registers are a first group of task registers and a second group of task registers. The third logical IP includes all functions of the first logical IP and the second logical IP. The method includes: when it is determined to invoke a function that is the same as that of the first logical IP, controlling the first software driver to configure the first group of task registers of the third logical IP, where the first software driver corresponds to a first interrupt number of the third logical IP; and when it is determined to invoke a function that is the same as that of the second logical IP, controlling the second software driver to configure the second group of task registers of the third logical IP, where the second software driver corresponds to a second interrupt number of the third logical IP.

Therefore, according to the software and hardware interaction method for accessing a logical IP provided in this application, software drivers before combination can be reused during logical IP splitting or combination, so that a new software architecture does not need to be developed and maintained for a software driver obtained through combination. In comparison with a conventional technology in which software drivers need to be reconstructed and a new software architecture needs to be developed and maintained during logical IP combination, resulting in high costs and a change in a user usage manner, this application effectively reduces costs. In addition, the reusing of the software drivers does not cause an API interface to change, and therefore user experience can be improved.

In a possible design, a first operating system includes the first software driver, a second operating system includes the second software driver, and the first software driver is the same as or different from the second software driver. Therefore, according to the software and hardware interaction method for accessing a logical IP provided in this application, two same software drivers can be included in two operating systems, the two same software drivers can invoke a same logical IP, and the logical IP supports a dual-ear mechanism. In this way, a function of the logical IP does not need to be invoked between two operating systems through inter-core communication, thereby reducing a delay and operating complexity, and effectively improving system operating efficiency. In addition, according to the software and hardware interaction method for accessing a logical IP provided in this application, two different software drivers located in different operating systems can further invoke a function of a same logical IP.

In a possible design, each group of task registers includes a plurality of sets of task registers, the first software driver corresponds to a first mutex register, and the second software driver corresponds to a second mutex register. The controlling the first software driver to configure the first group of task registers of the third logical IP includes: controlling the first software driver to lock the first mutex register, and to configure at least one set of task registers in a plurality of sets of task registers of the first group of task registers, and controlling the first software driver to unlock the first mutex register. The controlling the second software driver to configure the second group of task registers of the third logical IP includes: controlling the second software driver to lock the second mutex register, and to configure at least one set of task registers in a plurality of sets of task registers of the second group of task registers, and controlling the second software driver to unlock the second mutex register. Therefore, according to the software and hardware interaction method for accessing a logical IP provided in this application, in a normal operating case, when a software driver accesses a logical IP, the software driver needs to first lock a mutex register corresponding to the software driver, and then configure a task register corresponding to the software driver. In other words, before the software driver configures the task register, a condition of locking the corresponding mutex register is added, so that whether the software driver can continue to configure the task register can be controlled by using the condition.

In a possible design, the method further includes: when the third logical IP is reset, controlling the first software driver to lock the first mutex register and the second mutex register, and after the third logical IP is reset, controlling the first software driver to unlock the first mutex register and the second mutex register; or controlling the second software driver to lock the first mutex register and the second mutex register, and after the third logical IP is reset, controlling the second software driver to unlock the first mutex register and the second mutex register. Therefore, according to the software and hardware interaction method for accessing a logical IP provided in this application, when a dual-ear logical IP or a multi-ear logical IP is reset, one software driver performs a reset operation, and the software driver is controlled to lock all mutex registers. Therefore, another software driver cannot lock a mutex register corresponding to the another software driver, that is, cannot configure a task register corresponding to the another software driver. In this way, a case in which the another software driver cannot learn whether the reset operation is performed and continues to configure the task register, and consequently, a write configuration is lost and a read status is incorrect can be avoided, and the reset operation of the logical IP is properly performed.

In a possible design, the first software driver corresponds to a first clock switch register, the second software driver corresponds to a second clock switch register, and the first clock switch register and the second clock switch register are configured to control a logical clock of the third logical IP. The method further includes: when both the first clock switch register and the second clock switch register are controlled to be turned off, turning off the logical clock of the third logical IP; and when the first clock switch register or the second clock switch register is controlled to be turned on, turning on the logical clock of the third logical IP. Therefore, according to the software and hardware interaction method for accessing a logical IP provided in this application, two logical clock registers are introduced in a dual-ear logical IP mechanism. In addition, provided that one clock switch register is turned on, a logical clock of a logical IP is in an turned-on state. The logical clock of the logical IP is in a turned-off state only when both the clock switch registers are turned off. In this way, a switch status of the logical clock can be properly controlled.

In a possible design, each group of task registers includes a plurality of sets of task registers, each set of task registers includes a task priority register, and the task priority register is configured to reflect a priority of one set of task registers. The method further includes: controlling the third logical IP to execute each set of task registers based on a priority corresponding to each set of task registers. Therefore, according to the software and hardware interaction method for accessing a logical IP provided in this application, a task priority register is set in each set of task registers of a logical IP, so that the logical IP determines an execution sequence based on priorities of sets of task registers, and properly arranges a task preemption procedure.

In a possible design, the controlling the third logical IP to execute each set of task registers based on a priority corresponding to each set of task registers includes: controlling the first software driver to traverse a plurality of sets of task registers of the first group of task registers, to find a first set of task registers in an idle state; controlling the first software driver to configure the first set of task registers, where the first set of task registers changes from the idle state to a wait state; controlling the second software driver to traverse a plurality of sets of task registers of the second group of task registers, to find a second set of task registers in the idle state; controlling the second software driver to configure the second set of task registers, where the second set of task registers changes from the idle state to the wait state; controlling the third logical IP to traverse the first set of task registers and the second set of task registers that are in the wait state, and to compare a priority of the first set of task registers with a priority of the second set of task registers; when the priority of the first set of task registers is higher than the priority of the second set of task registers, controlling the third logical IP to execute the first set of task registers, where the first set of task registers changes from the wait state to a busy state, and after the third logical IP completes the execution of the first set of task registers, controlling the third logical IP to report, to the first software driver based on the first interrupt number, an interrupt status indicating that a task is completed, where the first set of task registers changes from the busy state to the idle state. Therefore, according to the software and hardware interaction method for accessing a logical IP provided in this application, the logical IP can compare priorities of a plurality of sets of task registers in the wait state, and preferentially select one set of task register with a highest priority for execution, to properly arrange the task preemption procedure.

In a possible design, the method further includes: when the priority of the first set of task registers is the same as the priority of the second set of task registers, controlling the third logical IP to compare configuration time of the first set of task registers with configuration time of the second set of task registers, and when the configuration time of the second set of task registers is earlier than the configuration time of the first set of task registers, controlling the third logical IP to execute the second set of task registers. Therefore, according to the software and hardware interaction method for accessing a logical IP provided in this application, the logical IP compares the priorities of the plurality of sets of task registers in the wait state. If a plurality of sets of task registers have a same priority, which is a highest priority, the logical IP continues to compare configuration time of the plurality of sets of task registers with the same priority, and preferentially selects one set of task registers with an earliest configuration time for execution, to properly arrange the task preemption procedure.

In a possible design, each group of task registers includes a plurality of sets of task registers, each set of task registers includes a task cancelation register, and the task cancelation register indicates the third logical IP to cancel execution of one set of task registers of the third logical IP. Therefore, according to the software and hardware interaction method for accessing a logical IP provided in this application, a task cancelation register is set in each set of task registers of a logical IP. During scenario switchover or when a set of task registers needs to be destroyed, a function of canceling execution of the set of task registers can be implemented by configuring the task cancelation register, to properly cancel a task.

In a possible design, the method further includes: controlling the first software driver to configure a first task cancelation register, where the first task cancelation register is located in a first set of task registers; when the first set of task registers is in a busy state, controlling the third logical IP to complete execution of the first set of task registers, and to report, to the first software driver based on the first interrupt number, an interrupt status indicating that a task is completed; and when the first set of task registers is in a wait state, controlling the third logical IP to cancel the execution of the first set of task registers, and to report, to the first software driver based on the first interrupt number, an interrupt status indicating that a task is canceled. Therefore, according to the software and hardware interaction method for accessing a logical IP provided in this application, after a task cancelation register is configured for a set of task registers, if the set of task registers is being executed by the logical IP, in other words, is in the busy state, a task cancelation fails, and the logical IP continues to complete the execution of the set of task registers. If the task register is not executed by the logical IP, in other words, is in the wait state, the execution of the task register is canceled, in other words, a task cancelation succeeds, to properly cancel the task.

According to a second aspect, an embodiment of this application provides an apparatus for accessing a logical IP. A first software driver is configured to invoke a function of a first logical IP. A second software driver is configured to invoke a function of a second logical IP. A third logical IP is obtained by combining the first logical IP and the second logical IP. The third logical IP includes two interrupt numbers and two groups of task registers. The two groups of task registers are a first group of task registers and a second group of task registers. The third logical IP includes all functions of the first logical IP and the second logical IP. The apparatus includes a first control unit and a second control unit. When it is determined to invoke a function that is the same as that of the first logical IP, the first control unit is configured to control the first software driver to configure the first group of task registers of the third logical IP, where the first software driver corresponds to a first interrupt number of the third logical IP. When it is determined to invoke a function that is the same as that of the second logical IP, the second control unit is configured to control the second software driver to configure the second group of task registers of the third logical IP, where the second software driver corresponds to a second interrupt number of the third logical IP. For beneficial effects achieved in the second aspect, refer to the beneficial effects in the first aspect.

In a possible design, a first operating system includes the first software driver, a second operating system includes the second software driver, and the first software driver is the same as or different from the second software driver.

In a possible design, each group of task registers includes a plurality of sets of task registers, the first software driver corresponds to a first mutex register, and the second software driver corresponds to a second mutex register. The first control unit is specifically configured to: control the first software driver to lock the first mutex register, and to configure at least one set of task registers in a plurality of sets of task registers of the first group of task registers, and control the first software driver to unlock the first mutex register. The second control unit is further specifically configured to: control the second software driver to lock the second mutex register, and to configure at least one set of task registers in a plurality of sets of task registers of the second group of task registers, and control the second software driver to unlock the second mutex register.

In a possible design, when the third logical IP is reset, the first control unit is further configured to control the first software driver to lock the first mutex register and the second mutex register, and after the third logical IP is reset, the first control unit is further configured to control the first software driver to unlock the first mutex register and the second mutex register; or the second control unit is further configured to control the second software driver to lock the first mutex register and the second mutex register, and after the third logical IP is reset, the second control unit is further configured to control the second software driver to unlock the first mutex register and the second mutex register.

In a possible design, the first software driver corresponds to a first clock switch register, the second software driver corresponds to a second clock switch register, and the first clock switch register and the second clock switch register are configured to control a logical clock of the third logical IP. When the first control unit controls the first clock switch register to be turned off and the second control unit controls the second clock switch register to be turned off, the logical clock of the third logical IP is turned off. When the first control unit controls the first clock switch register to be turned on or the second control unit controls the second clock switch register to be turned on, the logical clock of the third logical IP is turned on.

In a possible design, each group of task registers includes a plurality of sets of task registers, each set of task registers includes a task priority register, and the task priority register is configured to reflect a priority of one set of task registers. The apparatus further includes a third control unit, where the third control unit is configured to control the third logical IP to execute each set of task registers based on a priority corresponding to each set of task registers.

In a possible design, the first control unit is specifically configured to: control the first software driver to traverse a plurality of sets of task registers of the first group of task registers, to find a first set of task registers in an idle state; and control the first software driver to configure the first set of task registers, where the first set of task registers changes from the idle state to a wait state. The second control unit is specifically configured to: control the second software driver to traverse a plurality of sets of task registers of the second group of task registers, to find a second set of task registers in the idle state; and control the second software driver to configure the second set of task registers, where the second set of task registers changes from the idle state to the wait state. The third control unit is specifically configured to: control the third logical IP to traverse the first set of task registers and the second set of task registers that are in the wait state, and to compare a priority of the first set of task registers with a priority of the second set of task registers; when the priority of the first set of task registers is higher than the priority of the second set of task registers, control the third logical IP to execute the first set of task registers, where the first set of task registers changes from the wait state to a busy state; and after the third logical IP completes the execution of the first set of task registers, control the third logical IP to report, to the first software driver based on the first interrupt number, an interrupt status indicating that a task is completed, where the first set of task registers changes from the busy state to the idle state.

In a possible design, the third control unit is further configured to: when the priority of the first set of task registers is the same as the priority of the second set of task registers, control the third logical IP to compare configuration time of the first set of task registers with configuration time of the second set of task registers, and when the configuration time of the second set of task registers is earlier than the configuration time of the first set of task registers, control the third logical IP to execute the second set of task registers.

In a possible design, each group of task registers includes a plurality of sets of task registers, each set of task registers includes a task cancelation register, and the task cancelation register indicates the third logical IP to cancel execution of one set of task registers of the third logical IP.

In a possible design, the first control unit is further configured to control the first software driver to configure a first task cancelation register, where the first task cancelation register is located in a first set of task registers. When the first set of task registers is in a busy state, the third control unit controls the third logical IP to complete execution of the first set of task registers, and to report, to the first software driver based on the first interrupt number, an interrupt status indicating that a task is completed. When the first set of task registers is in a wait state, the third control unit controls the third logical IP to cancel the execution of the first set of task registers, and to report, to the first software driver based on the first interrupt number, an interrupt status indicating that a task is canceled.

According to a third aspect, a computer-readable storage medium is provided. The computer-readable storage medium stores computer instructions. When the computer instructions are run on an electronic device, the electronic device is enabled to perform the method in any one of the first aspect or the possible designs of the first aspect.

According to a fourth aspect, a computer program product is provided. When the computer program product runs on a computer, an electronic device is enabled to perform the method in any one of the first aspect or the possible designs of the first aspect.

For beneficial effects corresponding to the foregoing other aspects, refer to the descriptions of the beneficial effects of the first aspect. Details are not described herein again.

### BRIEF DESCRIPTION OF DRAWINGS

FIG. 1 is a diagram of combining logical IPs;
FIG. 2 is a diagram of accessing a logical IP in an AMP deployment scenario;
FIG. 3 is a diagram of a structure of a communication apparatus according to an embodiment of this application;
FIG. 4 is a diagram of a software and hardware interaction method for accessing a logical IP according to an embodiment of this application;
FIG. 5 is a diagram of combining logical IPs according to an embodiment of this application;
FIG. 6 is a diagram of accessing a logical IP in an AMP deployment scenario according to an embodiment of this application;
FIG. 7 is a diagram of operating mutex registers when a logical IP operates normally according to an embodiment of this application;
FIG. 8 is a diagram of operating mutex registers when a logical IP is reset according to an embodiment of this application;
FIG. 9 is a schematic flowchart of task preemption according to an embodiment of this application;
FIG. 10 is a schematic flowchart of task preemption according to an embodiment of this application;
FIG. 11 is a composition diagram of a structure of a communication apparatus according to an embodiment of this application; and
FIG. 12 is a composition diagram of a structure of a communication apparatus according to an embodiment of this application.

### DESCRIPTION OF EMBODIMENTS

For ease of understanding, descriptions of some concepts related to embodiments of this application are provided as examples for reference. Details are as follows.

Logical intellectual property (intellectual property, IP): As a hardware accelerator integrated in a chip, the logical IP may include a plurality of sets of task registers. When a software driver writes a value to a task register of the logical IP, which may be understood as when the software driver configures a task in the task register of the logical IP, the logical IP is configured to execute the corresponding task in the task register. A correspondence between the value written by the software driver to the task register and the task executed by the logical IP is agreed upon in advance.

Symmetric multi-processing (Symmetric Multi-Processing, SMP) structure: As a service deployment manner in a chip, SMP deployment features only one operating system instance. All central processing units (central processing units, CPUs) run the one operating system instance, and all services are deployed on the same operating system instance.

Asymmetric multi-processing (asymmetric multi-processing, AMP) structure: As a service deployment manner in a chip, AMP deployment features a plurality of CPUs, and each CPU runs one operating system instance. Services are distributed on a plurality of operating system instances, and a service deployed on each operating system instance may be completely different or partially the same, which is classified based on an actual product requirement.

Single ear: A logical IP integrates one interrupt number and one group of task registers, and can be invoked only by one software driver, where the one group of task registers may include a plurality of sets of task registers.

N ears: A logical IP integrates N interrupt numbers and N groups of task registers, and can be invoked by N software drivers, where N is an integer greater than 0. When N is an integer greater than or equal to 2, it indicates a plurality of ears. When N is equal to 2, it indicates dual ears. To be specific, a logical IP integrates two interrupt numbers and two groups of task registers, and can be invoked by two software drivers, where each group of task registers may include a plurality of sets of task registers.

In a conventional technology, there is only a single-ear software and hardware interaction mode. Embodiments of this application provide a solution design for a multi-ear software and hardware interaction mode.

Mutex register (mutex_reg): In embodiments of this application, the mutex register is a system register, namely, a system-side register located outside a logical IP. Therefore, the mutex register cannot be cleared by resetting any logical IP, and the mutex register can be cleared only by resetting a chip system. When a value of the mutex register is 0, a software driver can write any non-zero value x to the mutex register to lock the mutex register. After the mutex register is locked, the software driver cannot change the value of the mutex register by writing any value except the non-zero value x to the mutex register. Only that the software driver writes the same non-zero value x to the mutex register again can enable the value of the mutex register to change back to 0, in other words, unlock the mutex register.

Task register: The task register is a task register integrated in a logical IP. A group of task registers includes a plurality of sets of task registers, and each set of task registers includes a plurality of registers. Configuring one set of task registers by a software driver may be understood as configuring a task. In embodiments of this application, a set of task registers includes a task priority register, a task cancelation register, and the like. A set of task registers includes three states: an idle (idle) state, a wait (wait) state, and a busy (busy) state. A set of task registers in the idle state indicates that the set of task registers is not configured, and therefore can be found and configured by the software driver. A set of task registers in the wait state indicates that the set of task registers is configured by the software driver but is not executed by a logical IP, and therefore can be found and executed by the logical IP. A set of task registers in the busy state indicates that the set of task registers starts to be executed by the logical IP. After the logical IP completes the execution of the set of task registers, the set of task registers becomes idle again.

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of the embodiments, "a plurality of" means two or more unless otherwise specified.

The terms "first" and "second" mentioned below are only intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments, "coupled" means that two or more circuit elements are directly connected or indirectly connected unless otherwise specified. For example, that A is coupled with B may indicate that A is directly connected to B, or A is connected to B by using C.

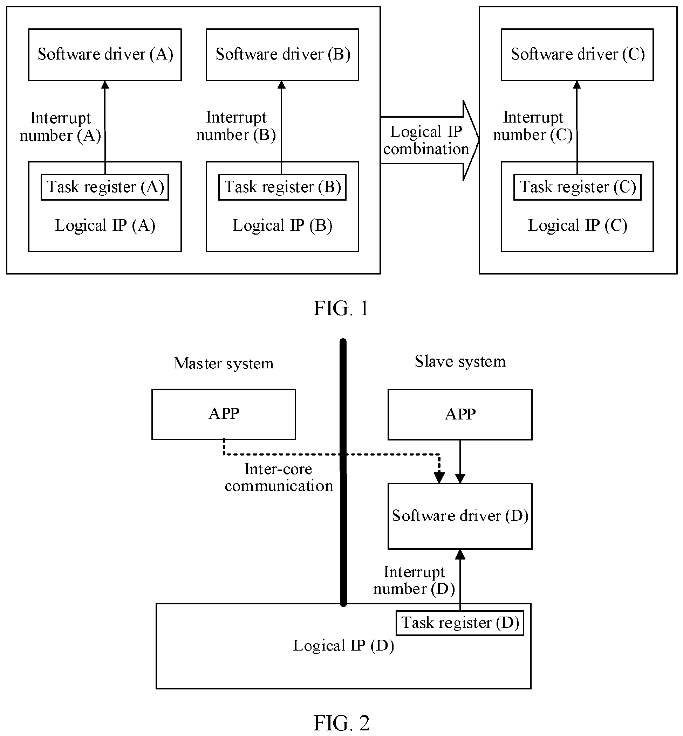

Currently, a logical IP includes an interrupt number and a group of task registers, and corresponds to a software driver. In other words, a software driver performs an operation on the logical IP and invokes a function of the logical IP. As shown in FIG. 1, a logical IP (A) includes an interrupt number (A) and a group of task registers (A), and corresponds to a software driver (A). The task registers (A) are located in the logical IP (A), and the task registers (A) may include a plurality of sets of task registers. The software driver (A) corresponds to the interrupt number (A) of the logical IP (A). The logical IP (A) interacts with the software driver (A). The software driver (A) configures a task in any one or more sets of task registers of the task registers (A) and invokes a function of the logical IP (A), so that the logical IP (A) executes the task configured by the software driver (A). After completing the execution of the task, the logical IP (A) reports, to the software driver (A), an interrupt status indicating that a task is completed, so that the software driver (A) learns that the logical IP (A) completes the task, and the software driver (A) can perform interrupt post-processing for the corresponding task. A logical IP (B) includes an interrupt number (B) and a group of task registers (B), and corresponds to a software driver (B). A plurality of sets of task registers included in the task registers (B) may be partially the same as or completely different from the plurality of sets of task registers included in the task registers (A).

During combination of the logical IPs (A) and (B), the logical IPs and the software drivers corresponding to the logical IPs all need to be combined. As shown in FIG. 1, the logical IP (A) and the logical IP (B) are combined into a logical IP (C), and the software driver (A) and the software driver (B) are combined into a software driver (C). The logical IP (C) obtained through combination includes all functions of the logical IP (A) and the logical IP (B). Similarly, the software driver (C) obtained through combination includes all functions of the software driver (A) and the software driver (B). However, during combination of the software drivers, a new software architecture needs to be developed and maintained for the software driver (C) obtained through combination, resulting in high software development and maintenance costs. In addition, a software architecture change causes an application programming interface (application programming interface, API) to change, and a user usage manner also changes. Correspondingly, during logical IP splitting, there is a problem in which a plurality of software architectures need to be developed and maintained, and user experience deteriorates.

In addition, when a service deployment manner of a chip is AMP deployment, in some scenarios, services of a plurality of systems may all need to invoke a function of a logical IP (D). However, to reduce chip costs, only one logical IP (D) is integrated, and a software driver (D) that can invoke the function of the logical IP (D) is deployed in only one system. Another system needs to obtain a capability of the software driver (D) through inter-core communication, to invoke the function of the logical IP (D). However, inter-core communication causes problems such as high CPU usage, a high delay, and complex service interaction. As shown in FIG. 2, dual systems are used as an example. Services of both a master system (master system) and a slave system (slave system) need to invoke a capability of the logical IP (D). However, the software driver (D) corresponding to the logical IP (D) is deployed only in the slave system. Therefore, the master system can obtain the capability of the logical IP (D) from the slave system by using the software driver (D) only by performing inter-core communication with the slave system.

Therefore, this application proposes a software and hardware interaction method for accessing a logical IP. Considering that in the conventional technology, during logical IP splitting or combination, a plurality of software architectures need to be developed and maintained, resulting in high overheads and high costs, and in addition, an API interface may change, resulting in a change in a user usage manner and affecting user experience, in this application, a second software driver is controlled to invoke a function of a third logical IP, a first software driver is controlled to invoke the function of the third logical IP, the first software driver is further configured to invoke a function of a first logical IP, and the second software driver is further configured to invoke a function of a second logical IP, where the first logical IP and the second logical IP are combined into the third logical IP. It may be understood as: In this application, the first software driver that corresponds to the first logical IP and the second software driver that corresponds to the second logical IP before the combination are reused, so that the third logical IP obtained through combination corresponds to the two software drivers, and can be invoked by the two software drivers through time division multiplexing. Software drivers with different functions can share a same logical IP that is at a bottom layer. Therefore, a plurality of software architectures do not need to be developed and maintained, effectively reducing costs. In addition, reusing of the software drivers does not cause an API interface to change, and therefore user experience can be improved. In addition, in an AMP deployment manner, when services of a plurality of systems all need to invoke a function of a same logical IP, this application supports deployment of same software drivers in the plurality of systems. Software drivers in different systems may share a same logical IP that is at a bottom layer. This avoids problems of high CPU usage, a high delay, and complex service interaction that are caused by obtaining a capability of the software driver through inter-core communication. Therefore, a delay and operating complexity can be reduced, and system operating efficiency can be effectively improved.

The software and hardware interaction method for accessing a logical IP provided in embodiments of this application may be applied to a scenario in which logical IP splitting or combination is performed, for example, a scenario in which a plurality of logical IPs are combined into one logical IP, or a scenario in which one logical IP is split into a plurality of logical IPs. The method may be further applied to a scenario in which a logical IP is accessed, for example, a scenario in which a software driver interacts with a logical IP. The software driver is located in an operating system, the operating system may include one or more software drivers, the logical IP is located in a chip, and the chip may include one or more logical IPs. The software driver executes a corresponding service by invoking a function of the logical IP.

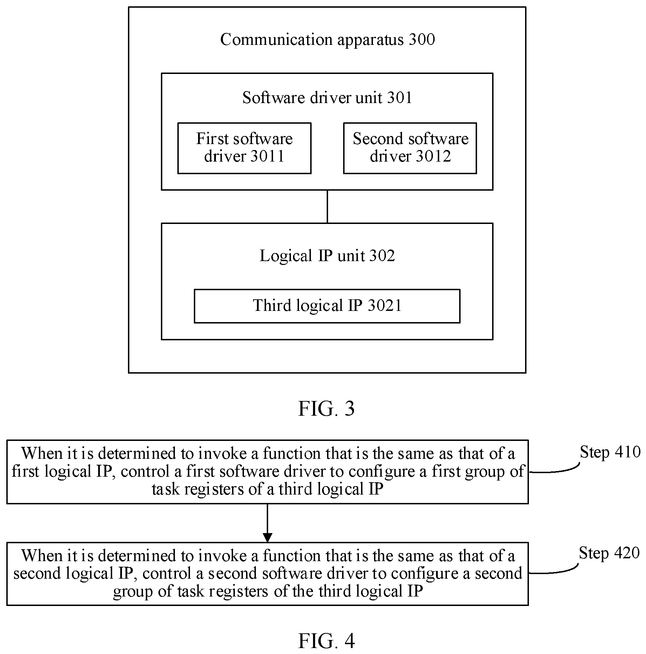

The software and hardware interaction method for accessing a logical IP provided in embodiments of this application is applied to a communication apparatus. FIG. 3 is a diagram of a structure of the communication apparatus. The communication apparatus includes an operating system and a chip. In FIG. 3, a communication apparatus 300 is used as an example. The communication apparatus 300 includes a software driver unit 301 and a logical IP unit 302.

It may be understood that the structure shown in this embodiment of this application does not constitute a specific limitation on the communication apparatus 300. In some other embodiments of this application, the communication apparatus 300 may include more or fewer parts than those shown in the figure, or combine some parts, or split some parts, or have different part arrangements. The parts shown in the figure may be implemented in hardware, software, or a combination of software and hardware.

The software driver unit 301 may include one or more software drivers, each software driver corresponds to a logical IP, and a plurality of software drivers may correspond to a same logical IP. The software driver can invoke a function of the logical IP corresponding to the software driver, for example, configure a task register of the logical IP. In this embodiment of this application, the software driver unit 301 includes a first software driver 3011 and a second software driver 3012. The first software driver 3011 and the second software driver 3012 share a same third logical IP 3021 that is at a bottom layer, and the first software driver 3011 and the second software driver 3012 can invoke a function of the third logical IP 3021 through time division multiplexing. The software driver unit 301 can configure a task register included in the logical IP unit 302, where the task register includes a task priority register, a task cancelation register, and the like, and can further configure a system register outside the logical IP unit 302, where the system register includes a mutex register, a clock switch register, and the like.

The logical IP unit 302 may include one or more logical IPs, and each logical IP may include one or more interrupt numbers and one or more groups of task registers, and correspond to one or more software drivers. After the software driver configures a task in the task register of the logical IP, the logical IP can execute the task configured in the task register and report an interrupt status to the software driver. In this embodiment of this application, the logical IP unit 302 includes the third logical IP 3021. The third logical IP 3021 corresponds to the first software driver 3011 and the second software driver 3012. The first software driver 3011 and the second software driver 3012 can invoke the function of the third logical IP 3021 through time division multiplexing. The third logical IP 3021 can execute in serial tasks configured by the first software driver 3011 and the second software driver 3012.

By using the foregoing communication apparatus provided in this application, the following describes, with reference to the accompanying drawings, a process in which software drivers are reused during logical IP splitting or combination in a process of accessing a logical IP in the method for accessing a logical IP provided for the communication apparatus in this application, so that a plurality of software drivers with different functions perform time division multiplexing on a same logical IP.

As shown in FIG. 4, an embodiment of this application provides a software and hardware interaction method for accessing a logical IP. The method is applied to a communication apparatus. For example, the communication apparatus is the communication apparatus 300. The communication apparatus 300 includes the software driver unit 301 and the logical IP unit 302. The software driver unit 301 includes the first software driver 3011 and the second software driver 3012, and the logical IP unit 302 includes the third logical IP 3021. The method includes the following steps.

Step 410: When it is determined to invoke a function that is the same as that of a first logical IP, control the first software driver to configure a first group of task registers of the third logical IP.

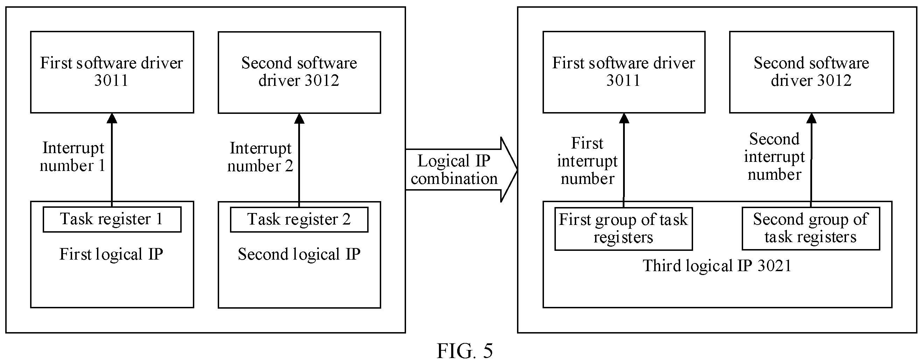

FIG. 5 shows a process of combining the first logical IP and a second logical IP into the third logical IP 3021. After the combination, a task register 1 of the first logical IP corresponds to the first group of task registers of the third logical IP 3021, and a task register 2 of the second logical IP corresponds to a second group of task registers of the third logical IP 3021. The task register 1 is not completely the same as the first group of task registers, and the task register 2 is not completely the same as the second group of task registers. Before the logical IP combination, the first software driver 3011 corresponds to the first logical IP, the first software driver 3011 corresponds to an interrupt number 1 of the first logical IP, and the first software driver 3011 is configured to invoke a function of the first logical IP. It may be understood as: The first software driver 3011 can configure the task register 1 of the first logical IP. After the logical IP combination, the third logical IP 3021 obtained through combination includes all functions of the first logical IP and the second logical IP. The first software driver 3011 corresponds to the third logical IP 3021, the first software driver 3011 corresponds to a first interrupt number of the third logical IP, and the first software driver 3011 is configured to invoke a function of the third logical IP 3021. It may be understood as: The first software driver 3011 is configured to invoke a function that is of the third logical IP 3021 and that is the same as that of the first logical IP. In other words, the first software driver 3011 can configure the first group of task registers of the third logical IP 3021.

For example, after the logical IP combination, when it is determined to invoke the function that is the same as that of the first logical IP, the first software driver 3011 is controlled to configure the first group of task registers of the third logical IP 3021, so that the function can be invoked. The first software driver 3011 corresponds to the first interrupt number of the third logical IP 3021, and the first software driver 3011 is further configured to invoke the function of the first logical IP. As shown in FIG. 5, it may be understood as: Before the logical IP combination, the first software driver 3011 corresponds to the first logical IP, and can configure the first group of task registers of the first logical IP. After the logical IP combination, the first software driver 3011 corresponds to the third logical IP 3021, and can configure the first group of task registers of the third logical IP 3021.

Step 420: When it is determined to invoke a function that is the same as that of the second logical IP, control the second software driver to configure the second group of task registers of the third logical IP.

As shown in FIG. 5, before the logical IP combination, the second software driver 3012 corresponds to the second logical IP, the second software driver 3012 corresponds to an interrupt number 2 of the second logical IP, and the second software driver 3012 is configured to invoke a function of the second logical IP. It may be understood as: The second software driver 3012 can configure the task register 2 of the second logical IP. The second software driver 3012 corresponds to the third logical IP 3021, the second software driver 3012 corresponds to a second interrupt number of the third logical IP 3021, and the second software driver 3012 is configured to invoke a function of the third logical IP 3021. It may be understood as: The second software driver 3012 is configured to invoke a function that is of the third logical IP 3021 and that is the same as that of the second logical IP, in other words, the second software driver 3012 can configure the second group of task registers of the third logical IP 3021.

For example, after the logical IP combination, when it is determined to invoke the function that is the same as that of the second logical IP, the second software driver 3012 is controlled to configure the second group of task registers of the third logical IP 3021, so that the function can be invoked. The second software driver 3012 corresponds to the second interrupt number of the third logical IP 3021, and the second software driver 3012 is further configured to invoke the function of the second logical IP. As shown in FIG. 5, it may be understood as: Before the logical IP combination, the second software driver 3012 corresponds to the second logical IP, and can configure the second group of task registers of the second logical IP. After the logical IP combination, the second software driver 3012 corresponds to the third logical IP 3021, and can configure the second group of task registers of the third logical IP 3021.

Step 410 and step 420 may be understood as performing logical IP combination on the first logical IP and the second logical IP, and the first logical IP and the second logical IP are combined into the third logical IP 3021. The third logical IP 3021 includes the two interrupt numbers and the two groups of task registers, and corresponds to the two software drivers. The two interrupt numbers included in the third logical IP 3021 are respectively the first interrupt number and the second interrupt number. The first interrupt number and the second interrupt number may be respectively the same as the interrupt number 1 integrated in the first logical IP and the interrupt number 2 integrated in the second logical IP before the logical IP combination, or may be respectively different from the interrupt number 1 and the interrupt number 2. This is not limited in this application. The two interrupt numbers included in the third logical IP 3021 may only indicate, in a chip, the third logical IP 3021. The two groups of task registers included in the third logical IP 3021 are respectively the first group of task registers and the second group of task registers. The two software drivers corresponding to the third logical IP 3021 are respectively the first software driver 3011 that corresponds to the first logical IP and the second software driver 3012 that corresponds to the second logical IP before the logical IP combination. In addition, in the two groups of task registers included in the third logical IP 3021, each group of task registers includes a plurality of sets of task registers, in other words, the third logical IP 3021 includes a plurality of sets of task registers.

It can be learned that the third logical IP 3021 obtained through combination supports to be invoked by the two software drivers, and is a dual-ear logical IP. In addition, the third logical IP 3021 reuses the software drivers corresponding to the first logical IP and the second logical IP before the combination. During logical IP combination, the software drivers are not combined. After the combination, the first software driver 3011 and the second software driver 3012 can perform time division multiplexing on the third logical IP 3021. Therefore, in this application, a new software architecture does not need to be developed and maintained, thereby reducing costs and improving user experience.

It may be understood that, a quantity of to-be-combined logical IPs is not limited in this application. During combination of N logical IPs, provided that a logical IP obtained through combination is enabled to support an N-ear mechanism, N software drivers corresponding to the N logical IPs before the combination may be reused, where the N software drivers share, through time division multiplexing, a function of the logical IP obtained through combination. Correspondingly, when a logical IP obtained through combination needs to be split into N independent logical IPs, only restoring a single-car mechanism for each independent logical IP is needed.

In some optional embodiments, a first operating system includes the first software driver, a second operating system includes the second software driver, and the first software driver is different from the second software driver.

The first software driver can invoke the function of the third logical IP, and the second software driver can also invoke the function of the third logical IP. Therefore, it may be understood as: Two different software drivers located in different operating systems can share a function of a same logical IP. In other words, in this application, during combination of different logical IPs, the to-be-combined logical IPs may be located in a same operating system, or may be located in different operating systems. This is not limited in this application.

In some optional embodiments, a first operating system includes the first software driver, a second operating system includes the second software driver, and the first software driver is the same as the second software driver.

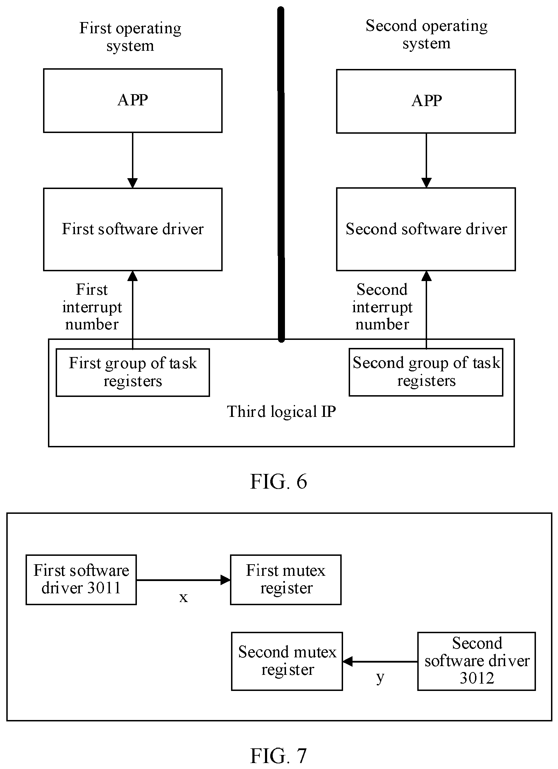

As shown in FIG. 6, when the chip in the communication apparatus 300 is in AMP deployment, dual systems are used as an example. The first operating system includes the first software driver, the first software driver can invoke the function of the third logical IP, the second operating system includes the second software driver, the second software driver can invoke the function of the third logical IP, and the first software driver is the same as the second software driver. Both the first operating system and the second operating system include the same software drivers, and the same software drivers share the function of the same logical IP. Therefore, when the first operating system needs to invoke the function of the third logical IP, the first operating system does not need to invoke the function of the third logical IP by performing inter-core communication with the second operating system, and the first operating system can directly invoke the function of the third logical IP by using the first software driver. Therefore, a delay and operating complexity are reduced, and system operating efficiency is effectively improved. In other words, when services of a plurality of operating systems each need to invoke a same logical IP E by using a software driver E, provided that the logical IP E is enabled to support a multi-ear mechanism and the software driver E is deployed in each of the plurality of operating systems, each operating system may invoke the logical IP E by using the software driver E included in the operating system, and inter-core communication does not need to be performed.

In some optional embodiments, a first operating system includes the first software driver and the second software driver, and a second operating system includes the first software driver and the second software driver.

Both the first software driver and the second software driver can invoke the function of the third logical IP, and both the first operating system and the second operating system include the first software driver and the second software driver. It may be understood as: The third logical IP is a four-ear logical IP, namely, a multi-ear logical IP, and a plurality of software drivers included in the first operating system can be the same as those of the second operating system. Therefore, a delay and operating complexity are reduced, and system operating efficiency is effectively improved.

It may be understood that a quantity of operating systems is not limited in this application. When services of N operating systems all need a function of a logical IP, provided that the logical IP is enabled to support the N-ear mechanism, software drivers with a same function may be deployed on the N operating systems, and the N software drivers with the same function share the function of the same logical IP through time division multiplexing.

In this application, in the N-ear mechanism, a quantity of logical IPs is substantially virtualized. From a perspective of software, it may be considered that there are "N logical IPs". However, from a perspective of hardware, there is still only one logical IP essentially. Therefore, the N-ear mechanism needs to resolve four core problems: reset, clock control, task preemption, and task cancelation. The following uses an example in which a communication apparatus is the communication apparatus 300, and the communication apparatus 300 has only one operating system, to describe a process of processing the four problems according to the software and hardware interaction method for accessing a logical IP provided in this application.

### Problem 1: Reset

In some optional embodiments, step 410 includes: controlling the first software driver to lock a first mutex register (mutex_reg), and to configure at least one set of task registers in a plurality of sets of task registers of the first group of task registers, and controlling the first software driver to unlock the first mutex register. Step 420 includes: controlling the second software driver to lock a second mutex register, and to configure at least one set of task registers in a plurality of sets of task registers of the second group of task registers, and controlling the second software driver to unlock the second mutex register.

The third logical IP 3021 corresponds to the first group of task registers and the second group of task registers, and each group of task registers includes the plurality of sets of task registers. The mutex register is a system-side register located outside the logical IP, the first software driver corresponds to the first mutex register, and the second software driver corresponds to the second mutex register. It may be understood that each software driver corresponds to one mutex register. If the third logical IP 3021 corresponds to N software drivers, there are N mutex registers in one-to-one correspondence with the N software drivers.

In this embodiment of this application, in a normal operating case, when a software driver accesses a logical IP, the software driver needs to first lock a mutex register corresponding to the software driver. When a value of the mutex register is 0, the software driver can configure the mutex register, in other words, the software driver can write any non-zero value x to the mutex register. After the non-zero value x is written to the mutex register, it indicates that the mutex register is locked. After the software driver locks the mutex register corresponding to the software driver, the software driver configures at least one set of task registers of a group of task registers corresponding to the software driver in the logical IP. After the configuration of the at least one set of task registers is completed, the software driver writes a same non-zero value x to the mutex register corresponding to the software driver, so that the value of the mutex register changes back to 0, which indicates that the mutex register is unlocked. After the software driver completes the configuration of the at least one set of task registers, the logical IP may start execution of the at least one set of task registers.

For example, as shown in FIG. 7, during normal operating, the first software driver 3011 corresponds to the first mutex register, and the second software driver 3012 corresponds to the second mutex register. The first software driver 3011 first configures a non-zero value x for the first mutex register to lock the first mutex register, and then configures at least one set of task registers of the third logical IP 3021. After the configuration is completed, the first software driver 3011 configures the non-zero value x for the first mutex register again to unlock the first mutex register, and then the third logical IP 3021 executes a task configured in the task register. Correspondingly, the second software driver 3012 first configures a non-zero value y for the second mutex register to lock the second mutex register, and then configures at least one set of task registers of the third logical IP 3021. After the configuration is completed, the second software driver 3012 configures the non-zero value y for the second mutex register again to unlock the second mutex register, and then the third logical IP 3021 executes a task configured in the task register.

It can be learned that, during normal operating, the first software driver 3011 configures only the first mutex register, and the second software driver 3012 configures only the second mutex register. When configuring the mutex registers, the two software drivers do not interfere with each other, and both can normally lock the corresponding mutex registers. Therefore, two software drivers of a dual-ear logical IP can complete normal function configuration in parallel.

In some optional embodiments, the method further includes: when the third logical IP is reset, controlling the first software driver to lock the first mutex register and the second mutex register, and after the third logical IP is reset, controlling the first software driver to unlock the first mutex register and the second mutex register; or controlling the second software driver to lock the first mutex register and the second mutex register, and after the third logical IP is reset, controlling the second software driver to unlock the first mutex register and the second mutex register.

When the logical IP is reset, all operations in which the software driver configures the task register of the logical IP are invalid, and a case in which a write configuration is lost and a read status is incorrect occurs. Therefore, to avoid the case when the logical IP is reset, it needs to be ensured that no software driver can perform an operation on the logical IP when the logical IP is reset. When the first software driver 3011 performs a reset operation, the second software driver 3012 cannot learn that the first software driver 3011 is performing the reset operation. Therefore, in this embodiment of this application, when the third logical IP is reset, the first software driver 3011 is controlled to lock the first mutex register and the second mutex register, in other words, write the non-zero value x to both the first mutex register and the second mutex register. In this case, the first software driver 3011 cannot perform an operation on the third logical IP because of the reset operation. In addition, the second software driver 3012 needs to first lock the second mutex register during normal operating, in other words, write the non-zero value y to the second mutex register. However, the second mutex register is locked in advance by the first software driver, and the second software driver 3012 cannot perform an operation of writing the non-zero value y to the second mutex register. Therefore, the second software driver 3012 cannot perform an operation on the third logical IP either, so that a technical effect that the first software driver 3011 and the second software driver 3012 are mutually exclusive during reset is achieved.

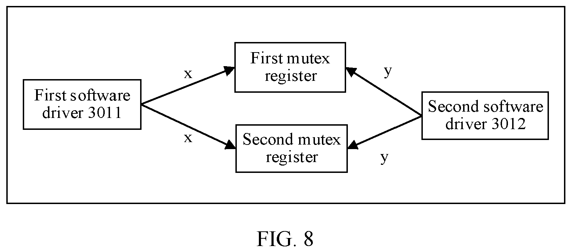

For example, as shown in FIG. 8, when the third logical IP 3021 is reset, the first software driver 3011 is controlled to lock the first mutex register and the second mutex register; and after the third logical IP 3021 is reset, the first software driver 3011 is controlled to unlock the first mutex register and the second mutex register, so that the first software driver 3011 and the second software driver 3012 can recover to normal operating. Alternatively, when the third logical IP 3021 is reset, the second software driver 3012 is controlled to lock the first mutex register and the second mutex register; and after the third logical IP 3021 is reset, the second software driver 3012 is controlled to unlock the first mutex register and the second mutex register, so that the first software driver 3011 and the second software driver 3012 can recover to normal operating.

It can be learned that, each software driver in a plurality of software drivers corresponding to the logical IP can reset the logical IP. However, it needs to be ensured that non-zero values configured when the plurality of software drivers corresponding to the logical IP lock mutex registers are all different (for example, x is not equal to y), in other words, it is ensured that a case in which the mutex register locked by the first software driver 3011 is unlocked by the second software driver 3012 does not occur, so that the two software drivers of the dual-ear logical IP are mutually exclusive during reset configuration.

In addition, all task registers are cleared after the logical IP is reset. Therefore, before the logical IP is reset, the software driver needs to read a value of a task register that is configured but not executed and store the value to an external device, for example, a double rate synchronous dynamic random access memory (double data rate synchronous dynamic random access memory, DDR SDRAM). After the logical IP is reset, the software driver reads the value of the task register from the DDR and reconfigures the value to the task register.

There are two manners for a software driver to configure a register (a write only (write only, WO) or write and read (write and read, WR) type register). One manner is that the software driver directly writes a value to the register through a register interface. The type of register needs to be configured through an advanced peripheral bus (advanced peripheral bus, APB), and a plurality of sets of register interfaces need to be defined. The other manner is that the software driver writes a value of the register to a memory and configures an address of the memory in an APB register. The logical IP directly reads information about the register from the memory. A configuration of the type of register may be loaded from a DDR through an advanced extensible interface (advanced extensible interface, AXI), and a plurality of sets of register interfaces does not need to be defined for the type of register. Similarly, there are also two manners for a software driver to read a status of a register (a read only (read only, RO) register). One manner is to read the status through an APB register, and a plurality of sets of register interfaces need to be defined. The other manner is that a logical IP writes the status of the register to a DDR, and the software driver reads the status from the DDR. A plurality of sets of register interfaces do not need to be defined for the type of register.

To simplify a recovery operation after the reset and reduce chip area costs, in this application, the register is divided into two segments. One segment is a register with an APB attribute, and the other segment is a register with an AXI attribute. Depending on whether a register can be read and written, the register is classified into three types: a write only (write only, WO) register, a write and read (write and read, WR) register, and a read only (read only, RO) register. The read only register is a register for the logical IP to return the status. The software driver can only read information from the read only register and cannot write a value to the read only register. Therefore, the type of software driver does not need to be configured by the read only register. After the register is segmented, during normal operating, after locking the mutex register, the software driver needs to configure only registers classified as a write only type and a read and write type in the APB attribute. A quantity of these registers is much smaller than a total quantity of registers. Therefore, time for the software driver to configure the register can be reduced, so that the mutex register can be unlocked quickly, thereby improving chip operating efficiency. Table 1 shows an example of the system register mentioned in this application. Table 2 shows an example of the register with the APB attribute in the logical IP in this application.

**Table 1**

| Register name | Attribute | Description | Note |
|---|---|---|---|
| XXX_RESET_CRG | WO | CRG reset register of an XXX module | |
| XXX_CKEN0_CRG | WR | Clock switch of an ear 0 of the XXX module | |
| XXX_CKEN1_CRG | WR | Clock switch of an ear 1 of the XXX module | |
| XXX_MUTEX_REG0 | WR | Mutex register of the XXX module | |
| XXX_MUTEX_REG1 | WR | Mutex register of the XXX module | |

**Table 2**

| Register name | Attribute | Description | Note |
|---|---|---|---|
| XXX_REGn_START | WO | Start register | |
| XXX_REGn_CANCEL | WO | Task cancelation register | |
| XXX_REGn_CANCEL_STATE | RO | Task cancelation status return register | After the software driver configures a cancelation, queries for whether the cancelation succeeds |
| XXX_REGn_TASK_CNT | RO | Task sequence | Because of priority preemption, a status register is needed to notify the software driver of sequence numbers of task completion. |
| XXX_REGn_SW_PRIVATE | WR | Software private register | Records a sequence of configuring tasks by the software driver |
| XXX_REGn_RAWINT | RO | Raw interrupt status register | |
| XXX_REGn_INTSTATE | RO | Interrupt status register | |
| XXX_REGn_INTMASK | WR | Interrupt mask register | |
| XXX_REGn_INTCLR | WO | Interrupt clear register | |
| XXX_REGn_PRIORITY | WR | Task priority register | |
| XXX _REGn_ADDR_L | WR | DDR start address of a task linked list (lower 32 bits) | Each task register supports chaining. |
| XXX_REGn_ADDR_H | WR | DDR start address of the task linked list (higher 32 bits) | A 32-bit system may have no such a register. |
| XXX_REGn_STATE | RO | Task operating status register | Four states: idle (idle) state/wait (wait) state/busy (busy) state/pause (pause) state |
| XXX_REGn_NEXT_NODE_ID | RO | ID of a next node on which operate is to be performed | After reset, the register needs to be restored by the software driver for usage. The register is not needed by a logical IP that does not support chaining. |
| XXX_REGn_NEXT_NODE _ADDR_L | RO | Address of a NEXT_NODE_ID node (lower 32 bits) | After reset, the register needs to be restored by the software driver for usage. The register is not needed by a logical IP that does not support chaining. |
| XXX_REGn_NEXT_ NODE_ADDR_H | RO | Address of a NEXT_NODE_ID node (higher 32 bits) | A 32-bit system may have no such a register. |
| XXX_REGn_XXX | | | Other user-defined registers of logical IPs |

### Problem 2: Clock control

In some optional embodiments, when both a first clock switch register and a second clock switch register are controlled to be turned off, a logical clock of the third logical IP is turned off; and when the first clock switch register or the second clock switch register is controlled to be turned on, the logical clock of the third logical IP is turned on.

The clock switch register is a system register, namely, a system-side register located outside the logical IP. Before the logical IP operates, the software driver needs to configure the clock switch register, to turn on the logical clock of the logical IP. The logical clock may be understood as a power module of the logical IP. The logical IP can be powered on only after the logical clock is turned on. The logical clock is closely related to power consumption of the chip. When the logical IP does not operate, frequent turning on of the logical clock causes high power consumption of the chip. Therefore, the software driver turns off the logical clock when the logical IP does not operate.

Currently, a single-ear logical IP corresponds to a software driver, and the software driver exclusively uses a logical IP. When the software driver does not configure any task for the logical IP, the logical IP does not need to operate. In this case, the software driver controls a clock switch register corresponding to the software driver to be turned off, so that a logical clock of the logical IP can be turned off. It may be understood as: When the software driver operates, the software driver controls the clock switch register corresponding to the software driver to be in an turned-on state; and when the software driver does not operate, the software driver controls the clock switch register corresponding to the software driver to be in a turned-off state. After a dual-ear mechanism is introduced in embodiments of this application, if the first software driver turns off the logical clock when the first software driver does not operate, the second software driver cannot operate either. Therefore, a single-ear clock control manner is not applicable to the dual-ear mechanism or a multi-ear mechanism.

In this application, in a dual-ear logical IP, a dual-clock switch register is introduced. The first software driver corresponds to the first clock switch register, and the second software driver corresponds to the second clock switch register. In other words, the third logical IP corresponds to the first clock switch register and the second clock switch register, and the first clock switch register and the second clock switch register are configured to control the logical clock of the third logical IP. When both the first clock switch register and the second clock switch register are controlled to be turned off, the logical clock of the third logical IP is turned off; and provided that one of the first clock switch register or the second clock switch register is turned on, the logical clock of the third logical IP is turned on. In other words, in the dual-ear mechanism, provided that one clock switch register is turned on, the logical clock of the logical IP is in the turned-on state; and the logical clock of the logical IP is in the turned-off state only when both the clock switch registers are turned off.

It may be understood that N clock switch registers need to be introduced to the logical IP of the N-ear mechanism. The logical clock of the logical IP is turned off only when all the N clock switch registers are turned off, and the logical clock of the logical IP is turned on when any one or more clock switch registers are turned on.

### Problem 3: Task preemption

In some optional embodiments, the third logical IP is controlled to execute each set of task registers based on a priority corresponding to each set of task registers.

The third logical IP 3021 includes the first group of task registers and the second group of task registers. The first software driver 3011 can configure the first group of task registers of the third logical IP 3021. The second software driver 3012 can configure the second group of task registers of the third logical IP 3021. Each group of task registers includes the plurality of sets of task registers, each set of task registers includes a task priority register, and the task priority register is configured to reflect a priority of one set of task registers. For example, each group of task registers of the third logical IP 3021 includes two sets of task registers. The third logical IP 3021 includes four sets of task registers. The first group of task registers includes a task register 0 and a task register 1, and the second group of task registers includes a task register 2 and a task register 3. The task register 0, the task register 1, the task register 2, and the task register 3 each include a task priority register. The task priority register located in the task register 0 is configured to reflect a priority of the task register 0, the task priority register located in the task register 1 is configured to reflect a priority of the task register 1, and so on.

The third logical IP 3021 executes each set of task registers based on the priority corresponding to each set of task registers. For example, if the first software driver configures the task register 0 and the task register 1, the priority of the task register 0 is at a level 1, and the priority of the task register 1 is at a level 2. It is agreed upon that a smaller level number of a priority indicates a higher level of the priority. Therefore, after comparing the task register 0 with the task register 1, the third logical IP 3021 first executes the task register 0, and then executes the task register 1.

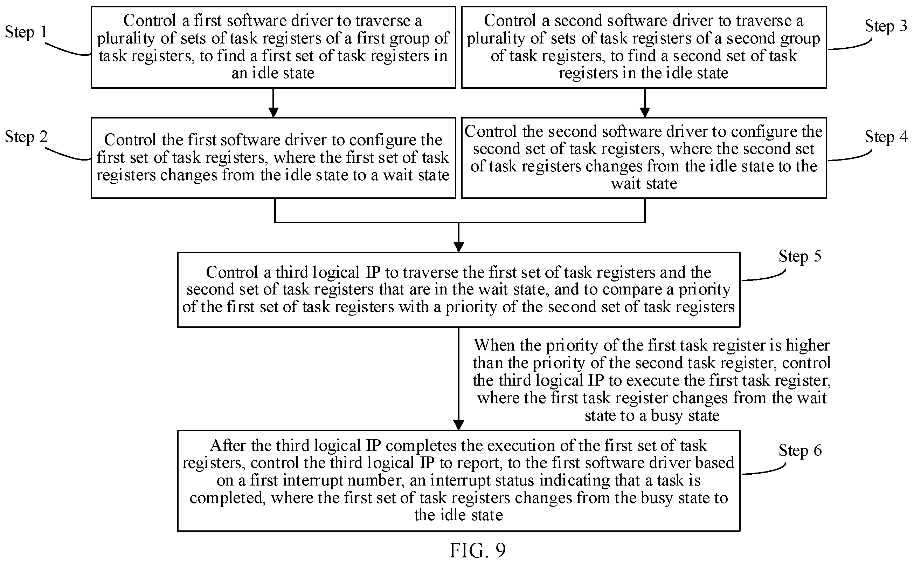

In some optional embodiments, as shown in FIG. 9, the controlling the third logical IP to execute each set of task registers based on a priority corresponding to each set of task registers specifically includes the following steps.

Step 1: Control the first software driver to traverse a plurality of sets of task registers of the first group of task registers, to find a first set of task registers in an idle state.

For example, each group of task registers of the third logical IP 3021 includes two sets of task registers. The third logical IP 3021 includes the four sets of task registers: the task register 0, the task register 1, the task register 2, and the task register 3. The task register 0 and task register 1 belong to the first group of task registers, and the task register 2 and task register 3 belong to the second group of task registers. The first software driver 3011 traverses the task register 0 and the task register 1 of the first group of task registers, and finds a set of task registers in the idle (idle) state, namely, a task register that is not configured by the first software driver 3011. For example, the first set of task registers in the idle state that is found is the task register 0.

Step 2: Control the first software driver to configure the first set of task registers, where the first set of task registers changes from the idle state to a wait state.

After finding the first set of task registers in the idle state, the first software driver 3011 configures the first set of task registers, in other words, writes a value to the first set of task registers, so that the first set of task registers changes from the idle state to the wait (wait) state, in other words, changes to a state of waiting to be executed by the logical IP. For example, the first software driver 3011 configures the task register 0, and the task register 0 changes from the idle state to the wait state of waiting to be executed by the logical IP.

Step 3: Control the second software driver to traverse a plurality of sets of task registers of the second group of task registers, to find a second set of task registers in the idle state.

The second software driver 3012 traverses the task register 2 and the task register 3 of the second group of task registers, and finds a set of task registers in the idle state, namely, a task register that is not configured by the second software driver 3012. For example, the second set of task registers in the idle state that is found by the second software driver 3012 is the task register 2.

Step 4: Control the second software driver to configure the second set of task registers, where the second set of task registers changes from the idle state to the wait state.

After finding the second set of task registers in the idle state, the second software driver 3012 configures the second set of task registers, in other words, writes a value to the second set of task registers, so that the second set of task registers changes from the idle state to the wait state, in other words, changes to the state of waiting to be executed by the logical IP. For example, the second software driver 3012 configures the task register 2, and the task register 2 changes from the idle state to the wait state of waiting to be executed by the logical IP.

Step 5: Control the third logical IP to traverse the first set of task registers and the second set of task registers that are in the wait state, and to compare a priority of the first set of task registers with a priority of the second set of task registers.

The third logical IP 3021 traverses a plurality of sets of task registers in the wait state. For example, the third logical IP 3021 traverses the task register 0 and the task register 2 that are in the wait state, and compares the priorities of the task register 0 and the task register 2 based on the priorities reflected by the task priority registers included in the task register 0 and the task register 2.

When the priority of the first set of task registers is higher than the priority of the second set of task registers, the third logical IP is controlled to execute the first set of task registers. When the third logical IP 3021 executes the first set of task registers, the first set of task registers changes from the wait state to a busy (busy) state, and the busy state indicates that the third logical IP 3021 is executing the first set of task registers. For example, when the priority of the task register 0 is higher than the priority of the task register 2, the third logical IP 3021 first executes the task register 0, and the task register 0 changes from the wait state to the busy state.

Step 6: After the third logical IP completes the execution of the first set of task registers, control the third logical IP to report, to the first software driver based on the first interrupt number, an interrupt status indicating that a task is completed, where the first set of task registers changes from the busy state to the idle state.

After the third logical IP 3021 completes the execution of the first set of task registers, the first set of task registers changes from the busy state to the idle state, in other words, the first set of task registers changes to the idle state in which the first set of task registers can be found again by the first software driver 3011. In addition, because the first software driver 3011 corresponds to the first interrupt number of the third logical IP 3021, the third logical IP 3021 reports, to the first software driver 3011 based on the first interrupt number, the interrupt status indicating that a task is completed, to indicate that the task of the first set of task registers is completed. For example, after the third logical IP 3021 completes the execution of the task register 0, the task register 0 changes from the busy state to the idle state. In addition, the third logical IP 3021 reports, to the first software driver 3011 based on the first interrupt number, an interrupt status indicating that a task of the task register 0 is completed.

In some optional embodiments, when the priority of the first set of task registers is the same as the priority of the second set of task registers, the third logical IP is controlled to compare configuration time of the first set of task registers with configuration time of the second set of task registers, and when the configuration time of the second set of task registers is earlier than the configuration time of the first set of task registers, the third logical IP is controlled to execute the second set of task registers.

When the third logical IP 3021 traverses the plurality of task registers in the wait state, if a plurality of sets of task registers with a highest priority are found, the third logical IP 3021 compares configuration time of the plurality of task registers with the highest priority, and first executes a task register with earlier configuration time. For example, when the third logical IP 3021 traverses the plurality of sets of task registers in the wait state, if the task register 0 and the task register 2 with a same priority are found, after the third logical IP 3021 compares configuration time of the task register 0 with configuration time of the task register 2, if the configuration time of the task register 2 is earlier than the configuration time of the task register 0, the third logical IP 3021 first executes the task register 2. In step 1 to step 6, first halves of step 1 and step 2 are steps performed by the first software driver 3011, first halves of step 3 and step 4 are steps performed by the second software driver 3012, and the remaining steps are steps performed by the logical IP. Step 1 and step 2 are executed in serial in the first software driver 3011, and step 3 and step 4 are executed in serial in the second software driver 3012. Step 1 and step 2 are performed in parallel with step 3 and step 4. Step 5 and step 6 are performed in serial in the logical IP. After step 6 is ended, the logical IP starts to repeat from step 5 to execute a next round of task. Step 1 to step 4 are performed in parallel with step 5 and step 6. It may be understood as: When the logical IP is in an operating state, in other words, executes the task, a plurality of software drivers may still configure task registers.

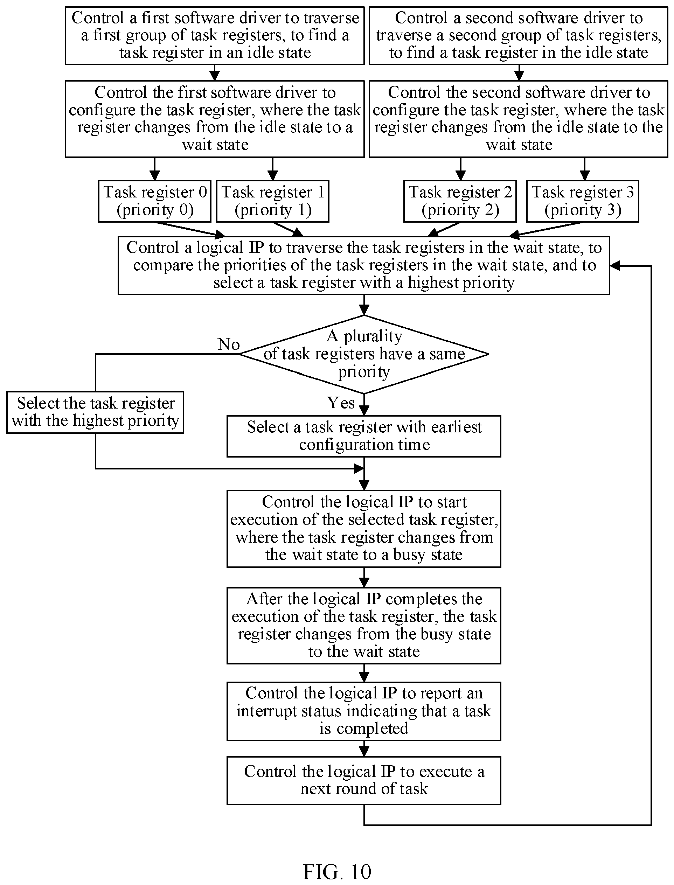

As shown in FIG. 10, an example in which the logical IP includes two groups of task registers, the first software driver corresponds to the first group of task registers, the second software driver corresponds to the second group of task registers, the first group of task registers includes the task register 0 and the task register 1, and the second group of task registers includes the task register 2 and the task register 3 is used, to show a schematic flowchart of task preemption according to an embodiment of this application. The first software driver is controlled to traverse the first group of task registers, to find a task register in the idle state, and configure the task register, where the task register changes from the idle state to the wait state. The second software driver is controlled to traverse the second group of task registers, to find a task register in the idle state, and configure the task register, where the task register changes from the idle state to the wait state. Therefore, the first software driver can configure the task register 0 and the task register 1, and the second software driver can configure the task register 2 and the task register 3. For example, the priority of task register 0 is 0, the priority of task register 1 is 1, the priority of task register 2 is 2, and the priority of task register 3 is 3. It is agreed upon that a smaller level number of a priority indicates a higher level of the priority. The logical IP is controlled to traverse the task registers in the wait state, compare the priorities of the task registers in the wait state, and select a task register with a highest priority. If a plurality of task registers have a same priority, a task register with earliest configuration time is selected. The logical IP is controlled to start execution of the selected task register, where the task register changes from the wait state to the busy state. After the logical IP completes the execution of the task register, the task register changes from the busy state to the idle state. Then, the logical IP is controlled to report the interrupt status indicating that a task is completed. It may be understood that if the executed task register is the task register 0 or the task register 1, the logical IP is controlled to report, to the first software driver, the interrupt status indicating that a task is completed. If the executed task register is the task register 2 or the task register 3, the logical IP is controlled to report, to the second software driver, the interrupt status indicating that a task is completed. After being controlled to report the interrupt status indicating that a task is completed, the logical IP is controlled to start execution of a next round of task. In other words, the logical IP is controlled to traverse task registers in the wait state, compare priorities of the task registers in the wait state, select a task register with the highest priority, and continue to repeat a subsequent process.

### Question 4: Task cancelation

In some optional embodiments, each group of task registers includes a plurality of sets of task registers, each set of task registers includes a task cancelation register, and the task cancelation register indicates the third logical IP to cancel execution of one set of task registers of the third logical IP.

The third logical IP 3021 includes the first group of task registers and the second group of task registers, and each group of task registers includes the plurality of sets of task registers. Therefore, the third logical IP 3021 includes the plurality of sets of task registers. In a dual-ear multi-task mode, a task register with a higher priority has a right to preempt a task register with a lower priority. In an extreme case, a task register with a lower priority may be always preempted and cannot be executed by the logical IP for long time. In addition, during scenario switchover, services in an existing scenario need to be destroyed, and services in a new scenario need to be created. During service destruction, those task registers that are configured for the logical IP but not executed by the logical IP need to be canceled in time, which may be understood as canceling task registers in a wait state in time. Therefore, each set of task registers in this application includes the task cancelation register, and the task cancelation register indicates the third logical IP 3021 to cancel execution of one set of task registers of the third logical IP 3021. For example, each group of task registers of the third logical IP 3021 includes two sets of task registers. The third logical IP 3021 includes four sets of task registers: a task register 0, a task register 1, a task register 2, and a task register 3. The task register 0, the task register 1, the task register 2, and the task register 3 each include a task cancelation register. The task cancelation register located in the task register 0 indicates the third logical IP 3021 to cancel execution of the task register 0, the task cancelation register located in the task register 1 indicates the third logical IP 3021 to cancel execution of the task register 1, and so on.

In some optional embodiments, the first software driver is controlled to configure a first task cancelation register, where the first task cancelation register is located in a first set of task registers. When the first set of task registers is in a busy state, the third logical IP is controlled to complete execution of the first set of task registers, and to report, to the first software driver based on the first interrupt number, an interrupt status indicating that a task is completed. When the first set of task registers is in a wait state, the third logical IP is controlled to cancel the execution of the first set of task registers, and to report, to the first software driver based on the first interrupt number, an interrupt status indicating that a task is canceled.

For example, when a set of task registers needs to be canceled, for example, when the first set of task registers needs to be canceled, the first software driver configures the task cancelation register of the first set of task registers, to indicate the third logical IP 3021 to cancel execution of the first set of task registers. When the first set of task registers is in the busy state, in other words, the first set of task registers is being executed by the third logical IP 3021, the third logical IP 3021 is controlled to complete the execution of the first set of task registers. Because the first software driver 3011 corresponds to the first interrupt number of the third logical IP 3021, the third logical IP 3021 is controlled to report, to the first software driver based on the first interrupt number, the interrupt status indicating that a task is completed. It may be understood as a cancelation failure of the first set of task registers. When the first set of task registers is in the wait state, in other words, the first set of task registers is not executed by the third logical IP 3021, the third logical IP 3021 is controlled to cancel the execution of the first set of task registers, and to report, to the first software driver based on the first interrupt number, the interrupt status indicating that a task is canceled. It may be understood as a cancelation success of the first set of task registers.

Therefore, the software and hardware interaction method for accessing a logical IP provided in embodiments of this application may be applied to the communication apparatus. Software drivers before combination are reused during logical IP splitting or combination, so that a new software architecture does not need to be developed and maintained for a software driver obtained through combination. In comparison with the conventional technology in which software drivers need to be reconstructed and a new software architecture needs to be developed and maintained during logical IP combination, resulting in high costs and a change in a user usage manner, this application effectively reduces costs. In addition, the reusing of the software drivers does not cause an API interface to change, and therefore user experience can be improved. In addition, in an AMP deployment manner, when services of a plurality of systems all need to invoke a function of a same logical IP, this application supports deployment of same software drivers in the plurality of systems. Software drivers in different systems may share a same logical IP that is at a bottom layer. This avoids problems of high CPU usage, a high delay, and complex service interaction that are caused by obtaining a capability of the software driver through inter-core communication. Therefore, a delay and operating complexity can be reduced, and system operating efficiency can be effectively improved.

In some optional embodiments, the four core problems, which are "reset, clock control, task preemption, and task cancelation", may be further implemented in other operation manners. For example, a mutex register is not used when a logical IP is reset. In single system, mutex is implemented by using a software lock of an operating system, for example, a spin lock spin_lock of a Linux system. In dual systems, reset operations of a logical IP are collectively performed by a software driver in one system through inter-core communication. During clock control, a dual-clock switch is not used. In the single system, task operating statuses of software drivers are queried and summarized to one software driver to determine whether a logical clock can be turned off. In the dual systems, task statuses of software drivers are summarized to one system through inter-core communication to determine whether a logical clock can be turned off. (This method is suitable only to module-level clock gating, not to frame-level clock gating.) During task preemption, a priority can be configured only by a software driver, and a logical IP arbitrates preemption. However, a preemption algorithm can be user-defined. During task cancelation, a cancelation command can be configured only by a software driver, and a logical IP responds to the cancelation command. However, judgments of the cancelation command can be set in a plurality of places. For example, when the software driver configures the cancelation command, the logical IP immediately determines whether a task can be canceled. Alternatively, when the software driver configures the cancelation command, if the logical IP is operating, the software driver waits until the logical IP completes execution of a current task register, and determines, before the logical IP starts to enter a next round of task, whether the task can be canceled. Alternatively, a cancelation command may not be needed, and it is agreed upon that after a set of task registers is preempted for specific times or waits for a period of time, a cancelation of the set of task registers is forcibly executed, to avoid a case in which a task register with a low priority may never be executed.

It may be understood that, to implement the foregoing functions, the foregoing communication apparatus includes a corresponding hardware structure and/or software module for performing each function. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of embodiments of this application.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is only logical function division. During actual implementation, another division manner may be used.

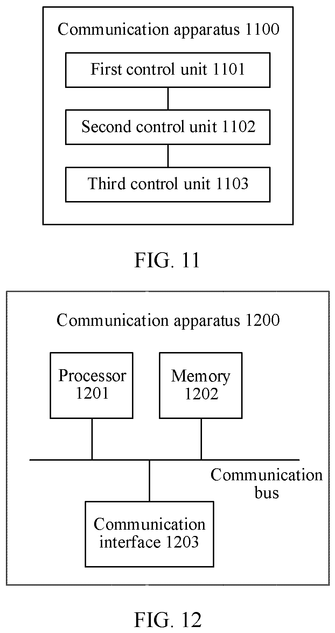

When each function module is obtained through division based on each corresponding function, FIG. 11 is a possible composition diagram of the communication apparatus 300 in the foregoing embodiment. As shown in FIG. 11, the communication apparatus 1100 may include a first control unit 1101, a second control unit 1102, and a third control unit 1103.

The first control unit 1101 may be configured to support the communication apparatus 1100 in performing step 410, step 1, step 2, and the like, and/or configured for another process of the technology described in this specification.

The second control unit 1102 may be configured to support the communication apparatus 1100 in performing step 420, step 3, step 4, and the like, and/or configured for another process of the technology described in this specification.

The third control unit 1103 may be configured to support the communication apparatus 1100 in performing step 5, step 6, and the like, and/or configured for another process of the technology described in this specification.

It should be noted that all related content of the steps in the foregoing method embodiments may be cited in function descriptions of corresponding functional modules. Details are not described herein again.

The communication apparatus 1100 provided in this embodiment is configured to perform the foregoing software and hardware interaction method for accessing a logical IP, and therefore can achieve the same effect as the foregoing implementation method.

When an integrated unit is used, as shown in FIG. 12, an embodiment of this application discloses a communication apparatus 1200. The communication apparatus 1200 may be the communication apparatus 300 in the foregoing embodiment. The communication apparatus 1200 may include a processing module, a storage module, and a communication module. The processing module may be configured to control and manage an action of the communication apparatus 1200. For example, the processing module may be configured to support the communication apparatus 1200 in performing steps such as step 410, step 420, and steps 1 to 6. The storage module may be configured to support the communication apparatus 1200 in storing program code, data, and the like. The communication module may be configured to support communication between the communication apparatus 1200 and another device.

Certainly, unit modules in the communication apparatus 1200 include but are not limited to the processing module, the storage module, and the communication module.

The processing module may be a processor or a controller. The processing module may implement or execute various example logical blocks, modules, and circuits described with reference to the content disclosed in this application. Alternatively, the processor may be a combination for implementing a computing function, for example, a combination of one or more microprocessors, or a combination of a neural network processing unit (neural network processing unit, NPU), a digital signal processing (digital signal processing, DSP), and a microprocessor. The storage module may be a storage. The communication module may be specifically a device that interacts with another external device.

For example, the processing module is a processor 1201, the storage module may be a storage 1202, and the communication module may be referred to as a communication interface 1203. The processor 1201, the storage 1202, the communication interface 1203, and the like may be connected together, for example, connected through a bus.

An embodiment of this application further provides a computer-readable storage medium. The computer-readable storage medium stores computer program code. When computer instructions are run on a computer or a processor, the computer or the processor is enabled to perform the software and hardware interaction method for accessing a logical IP in the foregoing embodiment.

An embodiment of this application further provides a computer program product. The computer program product includes computer instructions. When the computer instructions are run on a computer or a processor, the computer or the processor is enabled to perform the foregoing related steps, to implement the software and hardware interaction method for accessing a logical IP in the foregoing embodiment.

The communication apparatus, the computer storage medium, the computer program product, or the chip provided in the embodiments is configured to perform a corresponding method provided above. Therefore, for beneficial effects that can be achieved by the communication apparatus, the computer storage medium, the computer program product, or the chip, refer to beneficial effects of the corresponding method provided above. Details are not described herein again.

Based on descriptions of the foregoing implementations, a person skilled in the art may understand that, for the purpose of convenient and brief description, division of the foregoing functional modules is only used as an example for description. During actual application, the foregoing functions may be allocated to different functional modules for implementation based on a requirement. In other words, an internal structure of an apparatus is divided into different functional modules to implement all or some of the functions described above.

In the several embodiments provided in this application, it should be understood that the disclosed device and method may be implemented in other manners. For example, the device embodiments described are only examples. For example, division into modules or units is only logical function division. During actual implementation, another division manner may be used. For example, a plurality of units or components may be combined or integrated into another device, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and the parts displayed as units may be one physical unit or a plurality of physical units, in other words, may be located in one place, or may be distributed in a plurality of different places. Some or all of the units may be selected based on an actual requirement to achieve objectives of the solutions of the embodiments.

In addition, functional units in embodiments of this application may be integrated into one processing unit, or each unit may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or a part that makes contributions to the conventional technology, or all or some of the technical solutions, may be embodied in a form of a software product. The software product is stored in a storage medium, and includes several instructions for enabling a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

## Claims

1. A software and hardware interaction method for accessing a logical IP, wherein a first software driver is configured to invoke a function of a first logical intellectual property IP, a second software driver is configured to invoke a function of a second logical IP, a third logical IP is obtained by combining the first logical IP and the second logical IP, the third logical IP comprises two interrupt numbers and two groups of task registers, the two groups of task registers are a first group of task registers and a second group of task registers, and the third logical IP comprises all functions of the first logical IP and the second logical IP; and the method comprises:
when it is determined to invoke a function that is the same as that of the first logical IP, controlling the first software driver to configure the first group of task registers of the third logical IP, wherein the first software driver corresponds to a first interrupt number of the third logical IP; and
when it is determined to invoke a function that is the same as that of the second logical IP, controlling the second software driver to configure the second group of task registers of the third logical IP, wherein the second software driver corresponds to a second interrupt number of the third logical IP.

2. The method according to claim 1, wherein
a first operating system comprises the first software driver, a second operating system comprises the second software driver, and the first software driver is the same as or different from the second software driver.

3. The method according to claim 1 or 2, wherein each group of task registers comprises a plurality of sets of task registers, the first software driver corresponds to a first mutex register, and the second software driver corresponds to a second mutex register;
the controlling the first software driver to configure the first group of task registers of the third logical IP comprises:
controlling the first software driver to lock the first mutex register, and to configure at least one set of task registers in a plurality of sets of task registers of the first group of task registers, and controlling the first software driver to unlock the first mutex register; and
the controlling the second software driver to configure the second group of task registers of the third logical IP comprises:
controlling the second software driver to lock the second mutex register, and to configure at least one set of task registers in a plurality of sets of task registers of the second group of task registers, and controlling the second software driver to unlock the second mutex register.

4. The method according to claim 3, wherein the method further comprises: when the third logical IP is reset, controlling the first software driver to lock the first mutex register and the second mutex register, and
after the third logical IP is reset, controlling the first software driver to unlock the first mutex register and the second mutex register; or
controlling the second software driver to lock the first mutex register and the second mutex register, and
after the third logical IP is reset, controlling the second software driver to unlock the first mutex register and the second mutex register.

5. The method according to claim 1 or 2, wherein the first software driver corresponds to a first clock switch register, the second software driver corresponds to a second clock switch register, and the first clock switch register and the second clock switch register are configured to control a logical clock of the third logical IP; and the method further comprises:
when both the first clock switch register and the second clock switch register are controlled to be turned off, turning off the logical clock of the third logical IP; and
when the first clock switch register or the second clock switch register is controlled to be turned on, turning on the logical clock of the third logical IP.

6. The method according to claim 1 or 2, wherein each group of task registers comprises a plurality of sets of task registers, each set of task registers comprises a task priority register, and the task priority register is configured to reflect a priority of one set of task registers; and the method further comprises:
controlling the third logical IP to execute each set of task registers based on a priority corresponding to each set of task registers.

7. The method according to claim 6, wherein
the controlling the third logical IP to execute each set of task registers based on a priority corresponding to each set of task registers comprises:
controlling the first software driver to traverse a plurality of sets of task registers of the first group of task registers, to find a first set of task registers in an idle state;
controlling the first software driver to configure the first set of task registers, wherein the first set of task registers changes from the idle state to a wait state;
controlling the second software driver to traverse a plurality of sets of task registers of the second group of task registers, to find a second set of task registers in the idle state;
controlling the second software driver to configure the second set of task registers, wherein the second set of task registers changes from the idle state to the wait state;
controlling the third logical IP to traverse the first set of task registers and the second set of task registers that are in the wait state, and to compare a priority of the first set of task registers with a priority of the second set of task registers;
when the priority of the first set of task registers is higher than the priority of the second set of task registers, controlling the third logical IP to execute the first set of task registers, wherein the first set of task registers changes from the wait state to a busy state; and
after the third logical IP completes the execution of the first set of task registers, controlling the third logical IP to report, to the first software driver based on the first interrupt number, an interrupt status indicating that a task is completed, wherein the first set of task registers changes from the busy state to the idle state.

8. The method according to claim 7, wherein the method further comprises:
when the priority of the first set of task registers is the same as the priority of the second set of task registers, controlling the third logical IP to compare configuration time of the first set of task registers with configuration time of the second set of task registers, and when the configuration time of the second set of task registers is earlier than the configuration time of the first set of task registers, controlling the third logical IP to execute the second set of task registers.

9. The method according to claim 1 or 2, wherein each group of task registers comprises a plurality of sets of task registers, each set of task registers comprises a task cancelation register, and the task cancelation register indicates the third logical IP to cancel execution of one set of task registers of the third logical IP.

10. The method according to claim 9, wherein the method further comprises:
controlling the first software driver to configure a first task cancelation register, wherein the first task cancelation register is located in a first set of task registers;
when the first set of task registers is in a busy state, controlling the third logical IP to complete execution of the first set of task registers, and to report, to the first software driver based on the first interrupt number, an interrupt status indicating that a task is completed; and
when the first set of task registers is in a wait state, controlling the third logical IP to cancel the execution of the first set of task registers, and to report, to the first software driver based on the first interrupt number, an interrupt status indicating that a task is canceled.

11. An apparatus for accessing a logical IP, wherein a first software driver is configured to invoke a function of a first logical IP, a second software driver is configured to invoke a function of a second logical IP, a third logical IP is obtained by combining the first logical IP and the second logical IP, the third logical IP comprises two interrupt numbers and two groups of task registers, the two groups of task registers are a first group of task registers and a second group of task registers, and the third logical IP comprises all functions of the first logical IP and the second logical IP; and the apparatus comprises a first control unit and a second control unit, wherein
when it is determined to invoke a function that is the same as that of the first logical IP, the first control unit is configured to control the first software driver to configure the first group of task registers of the third logical IP, wherein the first software driver corresponds to a first interrupt number of the third logical IP; and
when it is determined to invoke a function that is the same as that of the second logical IP, the second control unit is configured to control the second software driver to configure the second group of task registers of the third logical IP, wherein the second software driver corresponds to a second interrupt number of the third logical IP.

12. The apparatus according to claim 11, wherein
a first operating system comprises the first software driver, a second operating system comprises the second software driver, and the first software driver is the same as or different from the second software driver.

13. The apparatus according to claim 11 or 12, wherein each group of task registers comprises a plurality of sets of task registers, the first software driver corresponds to a first mutex register, and the second software driver corresponds to a second mutex register;
the first control unit is specifically configured to: control the first software driver to lock the first mutex register, and to configure at least one set of task registers in a plurality of sets of task registers of the first group of task registers, and control the first software driver to unlock the first mutex register; and
the second control unit is further specifically configured to: control the second software driver to lock the second mutex register, and to configure at least one set of task registers in a plurality of sets of task registers of the second group of task registers, and control the second software driver to unlock the second mutex register.

14. The apparatus according to claim 13, wherein when the third logical IP is reset,
the first control unit is further configured to control the first software driver to lock the first mutex register and the second mutex register, and
after the third logical IP is reset, the first control unit is further configured to control the first software driver to unlock the first mutex register and the second mutex register; or
the second control unit is further configured to control the second software driver to lock the first mutex register and the second mutex register, and
after the third logical IP is reset, the second control unit is further configured to control the second software driver to unlock the first mutex register and the second mutex register.

15. The apparatus according to claim 11 or 12, wherein the first software driver corresponds to a first clock switch register, the second software driver corresponds to a second clock switch register, and the first clock switch register and the second clock switch register are configured to control a logical clock of the third logical IP;
when the first control unit controls the first clock switch register to be turned off and the second control unit controls the second clock switch register to be turned off, the logical clock of the third logical IP is turned off; and
when the first control unit controls the first clock switch register to be turned on or the second control unit controls the second clock switch register to be turned on, the logical clock of the third logical IP is turned on.

## Patentansprüche

1. Software- und Hardware-Interaktionsverfahren zum Zugreifen auf ein logisches IP, wobei ein erster Softwaretreiber dazu konfiguriert ist, eine Funktion eines ersten logischen geistigen Eigentums, logisches IP, aufzurufen, ein zweiter Softwaretreiber dazu konfiguriert ist, eine Funktion eines zweiten logischen IP aufzurufen, ein drittes logisches IP durch Kombinieren des ersten logischen IP und des zweiten logischen IP erlangt wird, das dritte logische IP zwei Interrupt-Nummern und zwei Gruppen von Aufgabenregistern umfasst, die zwei Gruppen von Aufgabenregistern eine erste Gruppe von Aufgabenregistern und eine zweite Gruppe von Aufgabenregistern sind, und das dritte logische IP alle Funktionen des ersten logischen IP und des zweiten logischen IP umfasst; und das Verfahren Folgendes umfasst:
wenn bestimmt wird, eine Funktion aufzurufen, die dieselbe wie jene des ersten logischen IP ist, Steuern des ersten Softwaretreibers, um die erste Gruppe von Aufgabenregistern des dritten logischen IP zu konfigurieren, wobei der erste Softwaretreiber einer ersten Interrupt-Nummer des dritten logischen IP entspricht; und
wenn bestimmt wird, eine Funktion aufzurufen, die dieselbe wie jene des zweiten logischen IP ist, Steuern des zweiten Softwaretreibers, um die zweite Gruppe von Aufgabenregistern des dritten logischen IP zu konfigurieren, wobei der zweite Softwaretreiber einer zweiten Interrupt-Nummer des dritten logischen IP entspricht.

2. Verfahren nach Anspruch 1, wobei
ein erstes Betriebssystem den ersten Softwaretreiber umfasst, ein zweites Betriebssystem den zweiten Softwaretreiber umfasst, und der erste Softwaretreiber derselbe wie der zweite Softwaretreiber ist oder sich von diesem unterscheidet.

3. Verfahren nach Anspruch 1 oder 2, wobei jede Gruppe von Aufgabenregistern eine Vielzahl von Sätzen von Aufgabenregistern umfasst, der erste Softwaretreiber einem ersten Mutex-Register entspricht und der zweite Softwaretreiber einem zweiten Mutex-Register entspricht;
das Steuern des ersten Softwaretreibers, um die erste Gruppe von Aufgabenregistern des dritten logischen IP zu konfigurieren, Folgendes umfasst:
Steuern des ersten Softwaretreibers, um das erste Mutex-Register zu sperren und mindestens einen Satz von Aufgabenregistern in einer Vielzahl von Sätzen von Aufgabenregistern der ersten Gruppe von Aufgabenregistern zu konfigurieren, und Steuern des ersten Softwaretreibers, um das erste Mutex-Register zu entsperren; und
das Steuern des zweiten Softwaretreibers, um die zweite Gruppe von Aufgabenregistern des dritten logischen IP zu konfigurieren, Folgendes umfasst:
Steuern des zweiten Softwaretreibers, um das zweite Mutex-Register zu sperren und mindestens einen Satz von Aufgabenregistern in einer Vielzahl von Sätzen von Aufgabenregistern der zweiten Gruppe von Aufgabenregistern zu konfigurieren, und Steuern des zweiten Softwaretreibers, um das zweite Mutex-Register zu entsperren.

4. Verfahren nach Anspruch 3, wobei das Verfahren ferner Folgendes umfasst: wenn das dritte logische IP zurückgesetzt wird,
Steuern des ersten Softwaretreibers, um das erste Mutex-Register und das zweite Mutex-Register zu sperren, und
nachdem das dritte logische IP zurückgesetzt ist, Steuern des ersten Softwaretreibers, um das erste Mutex-Register und das zweiten Mutex-Register zu entsperren; oder
Steuern des zweiten Softwaretreibers, um das erste Mutex-Register und das zweite Mutex-Register zu sperren, und
nachdem das dritte logische IP zurückgesetzt ist, Steuern des zweiten Softwaretreibers, um das erste Mutex-Register und das zweite Mutex-Register zu entsperren.

5. Verfahren nach Anspruch 1 oder 2, wobei der erste Softwaretreiber einem ersten Taktschalterregister entspricht, der zweite Softwaretreiber einem zweiten Taktschalterregister entspricht, und das erste Taktschalterregister und das zweite Taktschalterregister dazu konfiguriert sind, einen logischen Takt des dritten logischen IP zu steuern; und das Verfahren ferner Folgendes umfasst:
wenn sowohl das erste Taktschalterregister als auch das zweite Taktschalterregister gesteuert werden, um ausgeschaltet zu werden, Ausschalten des logischen Takts des dritten logischen IP; und
wenn das erste Taktschalterregister oder das zweite Taktschalterregister gesteuert wird, um eingeschaltet zu werden, Einschalten des logischen Takts des dritten logischen IP.

6. Verfahren nach Anspruch 1 oder 2, wobei jede Gruppe von Aufgabenregistern eine Vielzahl von Sätzen von Aufgabenregistern umfasst, jeder Satz von Aufgabenregistern ein Aufgabenprioritätsregister umfasst, und das Aufgabenprioritätsregister dazu konfiguriert ist, die Priorität eines Satzes von Aufgabenregistern widerzuspiegeln; und das Verfahren ferner Folgendes umfasst:
Steuern des dritten logischen IP, um jeden Satz von Aufgabenregistern basierend auf einer Priorität entsprechend jedem Satz von Aufgabenregistern auszuführen.

7. Verfahren nach Anspruch 6, wobei
das Steuern des dritten logischen IP, um jeden Satz von Aufgabenregistern basierend auf einer Priorität entsprechend jedem Satz von Aufgabenregistern auszuführen, Folgendes umfasst:
Steuern des ersten Softwaretreibers, um eine Vielzahl von Sätzen von Aufgabenregistern der ersten Gruppe von Aufgabenregistern zu durchlaufen, um einen ersten Satz von Aufgabenregistern in einem Leerlaufzustand aufzufinden;
Steuern des ersten Softwaretreibers, um den ersten Satz von Aufgabenregistern zu konfigurieren, wobei der erste Satz von Aufgabenregistern von dem Leerlaufzustand in einen Wartezustand wechselt;
Steuern des zweiten Softwaretreibers, um eine Vielzahl von Sätzen von Aufgabenregistern der zweiten Gruppe von Aufgabenregistern zu durchlaufen, um einen zweiten Satz von Aufgabenregistern in dem Leerlaufzustand aufzufinden;
Steuern des zweiten Softwaretreibers, um den zweiten Satz von Aufgabenregistern zu konfigurieren, wobei der zweite Satz von Aufgabenregistern von dem Leerlaufzustand in den Wartezustand wechselt;
Steuern des dritten logischen IP, um den ersten Satz von Aufgabenregistern und den zweiten Satz von Aufgabenregistern zu durchlaufen, die sich in dem Wartezustand befinden, und um eine Priorität des ersten Satzes von Aufgabenregistern mit einer Priorität des zweiten Satzes von Aufgabenregistern zu vergleichen;
wenn die Priorität des ersten Satzes von Aufgabenregistern höher als die Priorität des zweiten Satzes von Aufgabenregistern ist, Steuern des dritten logischen IP, um den ersten Satz von Aufgabenregistern auszuführen, wobei der erste Satz von Aufgabenregistern von dem Wartezustand in einen Besetztzustand wechselt; und
nachdem der dritte logische IP die Ausführung des ersten Satzes von Aufgabenregistern abgeschlossen hat, Steuern des dritten logischen IP, um dem ersten Softwaretreiber basierend auf der ersten Interrupt-Nummer einen Interrupt-Status zu melden, der angibt, dass eine Aufgabe abgeschlossen ist, wobei der erste Satz von Aufgabenregistern von dem Besetztzustand in den Leerlaufzustand wechselt.

8. Verfahren nach Anspruch 7, wobei das Verfahren ferner Folgendes umfasst:
wenn die Priorität des ersten Satzes von Aufgabenregistern dieselbe wie die Priorität des zweiten Satzes von Aufgabenregistern ist, Steuern des dritten logischen IP, um die Konfigurationszeit des ersten Satzes von Aufgabenregistern mit der Konfigurationszeit des zweiten Satzes von Aufgabenregistern zu vergleichen, und, wenn die Konfigurationszeit des zweiten Satzes von Aufgabenregistern vor der Konfigurationszeit des ersten Satzes von Aufgabenregistern liegt, Steuern des dritten logischen IP, um den zweiten Satz von Aufgabenregistern auszuführen.

9. Verfahren nach Anspruch 1 oder 2, wobei jede Gruppe von Aufgabenregistern eine Vielzahl von Sätzen von Aufgabenregistern umfasst, jeder Satz von Aufgabenregistern ein Aufgabenabbruchregister umfasst, und das Aufgabenabbruchregister das dritte logische IP anweist, die Ausführung eines Satzes von Aufgabenregistern des dritten logischen IP abzubrechen.

10. Verfahren nach Anspruch 9, wobei das Verfahren ferner Folgendes umfasst:
Steuern des ersten Softwaretreibers, um ein erstes Aufgabenabbruchregister zu konfigurieren, wobei sich das erste Aufgabenabbruchregister in einem ersten Satz Aufgabenregistern von befindet;
wenn sich der erste Satz von Aufgabenregistern in einem Belegtzustand befindet, Steuern des dritten logischen IP, um die Ausführung des ersten Satzes von Aufgabenregistern abzuschließen und dem ersten Softwaretreiber basierend auf der ersten Interrupt-Nummer einen Interrupt-Status zu melden, der angibt, dass eine Aufgabe abgeschlossen ist; und
wenn sich der erste Satz von Aufgabenregistern in einem Wartezustand befindet, Steuern des dritten logischen IP, um die Ausführung des ersten Satzes von Aufgabenregistern abzubrechen und dem ersten Softwaretreiber basierend auf der ersten Interrupt-Nummer einen Interrupt-Status zu melden, der angibt, dass eine Aufgabe abgebrochen wird.

11. Vorrichtung zum Zugreifen auf ein logisches IP, wobei ein erster Softwaretreiber dazu konfiguriert ist, eine Funktion eines ersten logischen IP aufzurufen, ein zweiter Softwaretreiber dazu konfiguriert ist, eine Funktion eines zweiten logischen IP aufzurufen, ein drittes logisches IP durch Kombinieren des ersten logischen IP und des zweiten logischen IP erlangt wird, das dritte logische IP zwei Interrupt-Nummern und zwei Gruppen von Aufgabenregistern umfasst, die zwei Gruppen von Aufgabenregistern eine erste Gruppe von Aufgabenregistern und eine zweite Gruppe von Aufgabenregistern sind, und das dritte logische IP alle Funktionen des ersten logischen IP und des zweiten logischen IP umfasst; und die Vorrichtung eine erste Steuereinheit und eine zweite Steuereinheit umfasst, wobei, wenn bestimmt wird, eine Funktion aufzurufen, die dieselbe wie jene des ersten logischen IP ist, die erste Steuereinheit dazu konfiguriert ist, den ersten Softwaretreiber zu steuern, um die erste Gruppe von Aufgabenregistern des dritten logischen IP zu konfigurieren, wobei der erste Softwaretreiber einer ersten Interrupt-Nummer des dritten logischen IP entspricht; und
wenn bestimmt wird, eine Funktion aufzurufen, die dieselbe wie jene des zweiten logischen IP ist, die zweite Steuereinheit dazu konfiguriert ist, den zweiten Softwaretreiber zu steuern, um die zweite Gruppe von Aufgabenregistern des dritten logischen IP zu konfigurieren, wobei der zweite Softwaretreiber einer zweiten Interrupt-Nummer des dritten logischen IP entspricht.

12. Vorrichtung nach Anspruch 11, wobei
ein erstes Betriebssystem den ersten Softwaretreiber umfasst, ein zweites Betriebssystem den zweiten Softwaretreiber umfasst, und der erste Softwaretreiber derselbe wie der zweite Softwaretreiber ist oder sich von diesem unterscheidet.

13. Vorrichtung nach Anspruch 11 oder 12, wobei jede Gruppe von Aufgabenregistern eine Vielzahl von Sätzen von Aufgabenregistern umfasst, der erste Softwaretreiber einem ersten Mutex-Register entspricht, und der zweite Softwaretreiber einem zweiten Mutex-Register entspricht;
die erste Steuereinheit speziell dazu konfiguriert ist: den ersten Softwaretreiber zu steuern, um das erste Mutex-Register zu sperren und mindestens einen Satz von Aufgabenregistern in einer Vielzahl von Sätzen von Aufgabenregistern der ersten Gruppe von Aufgabenregistern zu konfigurieren, und den ersten Softwaretreiber zu steuern, um das erste Mutex-Register zu entsperren; und
die zweite Steuereinheit ferner speziell dazu konfiguriert ist: den zweiten Softwaretreiber zu steuern, um das zweite Mutex-Register zu sperren und mindestens einen Satz von Aufgabenregistern in einer Vielzahl von Sätzen von Aufgabenregistern der zweiten Gruppe von Aufgabenregistern zu konfigurieren, und den zweiten Softwaretreiber zu steuern, um das zweite Mutex-Register zu entsperren.

14. Vorrichtung nach Anspruch 13, wobei, wenn das dritte logische IP zurückgesetzt wird,
die erste Steuereinheit ferner dazu konfiguriert ist, den ersten Softwaretreiber zu steuern, um das erste Mutex-Register und das zweite Mutex-Register zu sperren, und
nachdem das dritte logische IP zurückgesetzt ist, die erste Steuereinheit ferner dazu konfiguriert ist, den ersten Softwaretreiber zu steuern, um das erste Mutex-Register und das zweite Mutex-Register zu entsperren; oder
die zweite Steuereinheit ferner dazu konfiguriert ist, den zweiten Softwaretreiber zu steuern, um das erste Mutex-Register und das zweite Mutex-Register zu sperren, und
nachdem die dritte logische IP zurückgesetzt ist, die zweite Steuereinheit ferner dazu konfiguriert ist, den zweiten Softwaretreiber zu steuern, um das erste Mutex-Register und das zweite Mutex-Register zu entsperren.

15. Vorrichtung nach Anspruch 11 oder 12, wobei der erste Softwaretreiber einem ersten Taktschalterregister entspricht, der zweite Softwaretreiber einem zweiten Taktschalterregister entspricht, und das erste Taktschalterregister und das zweite Taktschalterregister dazu konfiguriert sind, einen logischen Takt des dritten logischen IP zu steuern;
wenn die erste Steuereinheit das Ausschalten des ersten Taktschalterregisters steuert und die zweite Steuereinheit das Ausschalten des zweiten Taktschalterregisters steuert, der logische Takt des dritten logischen IP ausgeschaltet wird; und wenn die erste Steuereinheit das Einschalten des ersten Taktschalterregisters steuert und die zweite Steuereinheit das Einschalten des zweiten Taktschalterregisters steuert, der logische Takt des dritten logischen IP eingeschaltet wird.

## Revendications

1. Procédé d'interaction logicielle et matérielle pour accéder à une IP logique, dans lequel un premier pilote logiciel est configuré pour invoquer une fonction d'une première propriété intellectuelle, IP, logique, un second pilote logiciel est configuré pour invoquer une fonction d'une deuxième IP logique, une troisième IP logique est obtenue en combinant la première IP logique et la deuxième IP logique, la troisième IP logique comprend deux numéros d'interruption et deux groupes de registres de tâches, les deux groupes de registres de tâches sont un premier groupe de registres de tâches et un second groupe de registres de tâches, et la troisième IP logique comprend toutes les fonctions de la première IP logique et de la deuxième IP logique ; et le procédé comprend :
lorsqu'il est déterminé d'invoquer une fonction qui est la même que celle de la première IP logique, la commande du premier pilote logiciel pour configurer le premier groupe de registres de tâches de la troisième IP logique, dans lequel le premier pilote logiciel correspond à un premier numéro d'interruption de la troisième IP logique ; et
lorsqu'il est déterminé d'invoquer une fonction qui est la même que celle de la deuxième IP logique, la commande du second pilote logiciel pour configurer le second groupe de registres de tâches de la troisième IP logique, dans lequel le second pilote logiciel correspond à un second numéro d'interruption de la troisième IP logique.

2. Procédé selon la revendication 1, dans lequel
un premier système d'exploitation comprend le premier pilote logiciel, un second système d'exploitation comprend le second pilote logiciel, et le premier pilote logiciel est le même que ou différent du second pilote logiciel.

3. Procédé selon la revendication 1 ou 2, dans lequel chaque groupe de registres de tâches comprend une pluralité d'ensembles de registres de tâches, le premier pilote logiciel correspond à un premier registre mutex, et le second pilote logiciel correspond à un second registre mutex ;
la commande du premier pilote logiciel pour configurer le premier groupe de registres de tâches de la troisième IP logique comprend :
la commande du premier pilote logiciel pour verrouiller le premier registre mutex, et pour configurer au moins un ensemble de registres de tâches dans une pluralité d'ensembles de registres de tâches du premier groupe de registres de tâches, et la commande du premier pilote logiciel pour déverrouiller le premier registre mutex ; et
la commande du second pilote logiciel pour configurer le second groupe de registres de tâches de la troisième IP logique comprend :
la commande du second pilote logiciel pour verrouiller le second registre mutex, et pour configurer au moins un ensemble de registres de tâches dans une pluralité d'ensembles de registres de tâches du second groupe de registres de tâches, et la commande du second pilote logiciel pour déverrouiller le second registre mutex.

4. Procédé selon la revendication 3, dans lequel le procédé comprend également : lorsque la troisième IP logique est réinitialisée,
la commande du premier pilote logiciel pour verrouiller le premier registre mutex et le second registre mutex, et
après la réinitialisation de la troisième IP logique, la commande du premier pilote logiciel pour déverrouiller le premier registre mutex et le second registre mutex ; ou
la commande du second pilote logiciel pour verrouiller le premier registre mutex et le second registre mutex, et
après la réinitialisation de la troisième IP logique, la commande du second pilote logiciel pour déverrouiller le premier registre mutex et le second registre mutex.

5. Procédé selon la revendication 1 ou 2, dans lequel le premier pilote logiciel correspond à un premier registre de commutation d'horloge, le second pilote logiciel correspond à un second registre de commutation d'horloge, et le premier registre de commutation d'horloge et le second registre de commutation d'horloge sont configurés pour commander une horloge logique de la troisième IP logique ; et le procédé comprend également :
lorsque le premier registre de commutation d'horloge et le second registre de commutation d'horloge sont tous deux commandés pour être désactivés, la désactivation de l'horloge logique de la troisième IP logique ; et
lorsque le premier registre de commutation d'horloge ou le second registre de commutation d'horloge est commandé pour être activé, l'activation de l'horloge logique de la troisième IP logique.

6. Procédé selon la revendication 1 ou 2, dans lequel chaque groupe de registres de tâches comprend une pluralité d'ensembles de registres de tâches, chaque ensemble de registres de tâches comprend un registre de priorité de tâche, et le registre de priorité de tâche est configuré pour refléter une priorité d'un ensemble de registres de tâches ; et le procédé comprend également :
la commande de la troisième IP logique pour exécuter chaque ensemble de registres de tâches sur la base d'une priorité correspondant à chaque ensemble de registres de tâches.

7. Procédé selon la revendication 6, dans lequel
la commande de la troisième IP logique pour exécuter chaque ensemble de registres de tâches sur la base d'une priorité correspondant à chaque ensemble de registres de tâches comprend :
la commande du premier pilote logiciel pour parcourir une pluralité d'ensembles de registres de tâches du premier groupe de registres de tâches, pour trouver un premier ensemble de registres de tâches dans un état inactif ;
la commande du premier pilote logiciel pour configurer le premier ensemble de registres de tâches, dans lequel le premier ensemble de registres de tâches passe de l'état inactif à un état d'attente ;
la commande du second pilote logiciel pour parcourir une pluralité d'ensembles de registres de tâches du second groupe de registres de tâches, pour trouver un second ensemble de registres de tâches dans l'état inactif ;
la commande du second pilote logiciel pour configurer le second ensemble de registres de tâches, dans lequel le second ensemble de registres de tâches passe de l'état inactif à l'état d'attente ;
la commande de la troisième IP logique pour parcourir le premier ensemble de registres de tâches et le second ensemble de registres de tâches qui sont dans l'état d'attente, et pour comparer une priorité du premier ensemble de registres de tâches avec une priorité du second ensemble de registres de tâches ;
lorsque la priorité du premier ensemble de registres de tâches est supérieure à la priorité du second ensemble de registres de tâches, la commande de la troisième IP logique pour exécuter le premier ensemble de registres de tâches, dans lequel le premier ensemble de registres de tâches passe de l'état d'attente à un état occupé ; et
après que la troisième IP logique a terminé l'exécution du premier ensemble de registres de tâches, la commande de la troisième IP logique pour signaler, au premier pilote logiciel sur la base du premier numéro d'interruption, un état d'interruption indiquant qu'une tâche est terminée, dans lequel le premier ensemble de registres de tâches passe de l'état occupé à l'état inactif.

8. Procédé selon la revendication 7, dans lequel le procédé comprend également :
lorsque la priorité du premier ensemble de registres de tâches est la même que la priorité du second ensemble de registres de tâches, la commande de la troisième IP logique pour comparer le temps de configuration du premier ensemble de registres de tâches avec le temps de configuration du second ensemble de registres de tâches, et lorsque le temps de configuration du second ensemble de registres de tâches est antérieure au temps de configuration du premier ensemble de registres de tâches, la commande de la troisième IP logique pour exécuter le second ensemble de registres de tâches.

9. Procédé selon la revendication 1 ou 2, dans lequel chaque groupe de registres de tâches comprend une pluralité d'ensembles de registres de tâches, chaque ensemble de registres de tâches comprend un registre d'annulation de tâches, et le registre d'annulation de tâches indique à la troisième IP logique d'annuler l'exécution d'un ensemble de registres de tâches de la troisième IP logique.

10. Procédé selon la revendication 9, dans lequel le procédé comprend également :
la commande du premier pilote logiciel pour configurer un premier registre d'annulation de tâches, dans lequel le premier registre d'annulation de tâches est situé dans un premier ensemble de registres de tâches ;
lorsque le premier ensemble de registres de tâches est dans un état occupé, la commande de la troisième IP logique pour terminer l'exécution du premier ensemble de registres de tâches, et pour signaler, au premier pilote logiciel sur la base du premier numéro d'interruption, un état d'interruption indiquant qu'une tâche est terminée ; et
lorsque le premier ensemble de registres de tâches est dans un état d'attente, la commande de la troisième IP logique pour annuler l'exécution du premier ensemble de registres de tâches, et pour signaler, au premier pilote logiciel sur la base du premier numéro d'interruption, un état d'interruption indiquant qu'une tâche est annulée.

11. Appareil pour accéder à une IP logique, dans lequel un premier pilote logiciel est configuré pour invoquer une fonction d'une première IP logique, un second pilote logiciel est configuré pour invoquer une fonction d'une deuxième IP logique, une troisième IP logique est obtenue en combinant la première IP logique et la deuxième IP logique, la troisième IP logique comprend deux numéros d'interruption et deux groupes de registres de tâches, les deux groupes de registres de tâches sont un premier groupe de registres de tâches et un second groupe de registres de tâches, et la troisième IP logique comprend toutes les fonctions de la première IP logique et de la deuxième IP logique ; et l'appareil comprend une première unité de commande et une seconde unité de commande, dans lequel
lorsqu'il est déterminé d'invoquer une fonction qui est la même que celle de la première IP logique, la première unité de commande est configurée pour commander le premier pilote logiciel pour configurer le premier groupe de registres de tâches de la troisième IP logique, dans lequel le premier pilote logiciel correspond à un premier numéro d'interruption de la troisième IP logique ; et
lorsqu'il est déterminé d'invoquer une fonction qui est la même que celle de la deuxième IP logique, la seconde unité de commande est configurée pour commander le second pilote logiciel pour configurer le second groupe de registres de tâches de la troisième IP logique, dans lequel le second pilote logiciel correspond à un second numéro d'interruption de la troisième IP logique.

12. Appareil selon la revendication 11, dans lequel un premier système d'exploitation comprend le premier pilote logiciel, un second système d'exploitation comprend le second pilote logiciel, et le premier pilote logiciel est le même que ou est différent du second pilote logiciel.

13. Appareil selon la revendication 11 ou 12, dans lequel chaque groupe de registres de tâches comprend une pluralité d'ensembles de registres de tâches, le premier pilote logiciel correspond à un premier registre mutex, et le second pilote logiciel correspond à un second registre mutex ;
la première unité de commander est spécifiquement configurée pour : commander le premier pilote logiciel pour verrouiller le premier registre mutex, et pour configurer au moins un ensemble de registres de tâches dans une pluralité d'ensembles de registres de tâches du premier groupe de registres de tâches, et commander le premier pilote logiciel pour déverrouiller le premier registre mutex ; et
la seconde unité de commande est également spécifiquement configurée pour : commander le second pilote logiciel pour verrouiller le second registre mutex, et pour configurer au moins un ensemble de registres de tâches dans une pluralité d'ensembles de registres de tâches du second groupe de registres de tâches, et commander le second pilote logiciel pour déverrouiller le second registre mutex.

14. Appareil selon la revendication 13, dans lequel lorsque la troisième IP logique est réinitialisée,
la première unité de commande est également configurée pour commander le premier pilote logiciel pour verrouiller le premier registre mutex et le second registre mutex, et
après la réinitialisation de la troisième IP logique, la première unité de commande est également configurée pour commander le premier pilote logiciel pour déverrouiller le premier registre mutex et le second registre mutex ; ou
la seconde unité de commande est également configurée pour commander le second pilote logiciel pour verrouiller le premier registre mutex et le second registre mutex, et
après la réinitialisation de la troisième IP logique, la seconde unité de commande est également configurée pour commander le second pilote logiciel pour déverrouiller le premier registre mutex et le second registre mutex.

15. Appareil selon la revendication 11 ou 12, dans lequel le premier pilote logiciel correspond à un premier registre de commutation d'horloge, le second pilote logiciel correspond à un second registre de commutation d'horloge, et le premier registre de commutation d'horloge et le second registre de commutation d'horloge sont configurés pour commander une horloge logique de la troisième IP logique ;
lorsque la première unité de commande commande le premier registre de commutation d'horloge pour qu'il soit désactivé et que la seconde unité de commande commande le second registre de commutation d'horloge pour qu'il soit désactivé, l'horloge logique de la troisième IP logique est désactivée ; et
lorsque la première unité de commande commande le premier registre de commutation d'horloge pour qu'il soit activé ou que la seconde unité de commande commande le second registre de commutation d'horloge pour qu'il soit activé, l'horloge logique de la troisième IP logique est activée.
